# FASCICULE DE BREVET EUROPEEN

(11) **EP 3 803 568 B1**
(45) Date de publication et mention de la délivrance du brevet: **28.01.2026**
(21) Numéro de dépôt: 19790044.2
(22) Date de dépôt: 17.05.2019
(51) Int. Cl.: G06F 8/20, G06F 8/34, G06F 8/30, G06F 9/445, G06F 21/62, G06F 8/38, H04L 12/28, G06F 9/50

(54) **AGRÉGATION D'OBJETS CONNECTÉS**
AGGREGATION VON VERBUNDENEN OBJEKTEN
AGGREGATION OF CONNECTED OBJECTS

(30) Priorité: 30.05.2018 FR 1854614
(43) Date de publication de la demande: 14.04.2021
(73) Titulaire: Orange, 92130 Issy-les-Moulineaux (FR)
(72) Inventeur: PETIT, Stéphane, 92326 Châtillon Cedex (FR); BERTECHE, Olivier, 92326 Châtillon Cedex (FR)
(74) Mandataire: Tarquis-Guillou, Anne
(86) Numéro de dépôt international: PCT/FR2019/051132
(87) Numéro de publication internationale: WO 2019/229328

(56) Documents cités:
- MUHAMMAD GOLAM KIBRIA ET AL: "Logistic Model to Support Service Modularity for the Promotion of Reusability in a Web Objects-Enabled IoT Environment", SENSORS 2017, 17(10), 2180, 22 September 2017 (2017-09-22), pages 1 - 21, XP055562217, Retrieved from the Internet <URL:https://doi.org/10.3390/s17102180> [retrieved on 20190226]
- HUSSEIN DINA ET AL: "Access control in IoT: From requirements to a candidate vision", 2017 20TH CONFERENCE ON INNOVATIONS IN CLOUDS, INTERNET AND NETWORKS (ICIN), IEEE, 7 March 2017 (2017-03-07), pages 328 - 330, XP033085397, DOI: 10.1109/ICIN.2017.7899435
- BOUSSARD MATHIEU ET AL: "The Majord'Home: a SDN approach to let isps manage and extend their customers'home networks", 10TH INTERNATIONAL CONFERENCE ON NETWORK AND SERVICE MANAGEMENT (CNSM) AND WORKSHOP, IFIP, 17 November 2014 (2014-11-17), pages 430 - 433, XP032724779, DOI: 10.1109/CNSM.2014.7014207
- ROBERT KLEINFELD ET AL: "glue.things", WEB OF THINGS, ACM, 2 PENN PLAZA, SUITE 701 NEW YORK NY 10121-0701 USA, 8 October 2014 (2014-10-08), pages 16 - 21, XP058067890, ISBN: 978-1-4503-3066-4, DOI: 10.1145/2684432.2684436
- MRISSA MICHAEL ET AL: "An Avatar Architecture for the Web of Things", IEEE INTERNET COMPUTING, INSTITUTE OF ELECTRICAL AND ELECTRONICS ENGINEERS, US, vol. 19, no. 2, 1 March 2015 (2015-03-01), pages 30 - 38, XP011575894, ISSN: 1089-7801, [retrieved on 20150316], DOI: 10.1109/MIC.2015.19

## Description

### Domaine technique

L'invention se rapporte au domaine général des réseaux de télécommunication et plus particulièrement à l'Internet des objets.

### Etat de la technique

Depuis maintenant quelques années, l'Internet des Objets - ou IoT pour *Internet of Things -* se déploie dans le milieu du grand public et dans le monde professionnel. Les objets connectés sont par exemple des objets domestiques comme des caméras, des ampoules, des lampes, des radiateurs ou encore des appareils audio, vidéo, des compteurs d'électricité, des véhicules, des systèmes d'arrosage, etc. Les objets connectés dialoguent entre eux via plusieurs catégories de réseaux, qu'ils soient filaires ou sans fil.

Ces objets sont généralement limités en termes de fonctionnalités, notamment celles qui ne sont pas en relation directe avec le service mis en œuvre grâce à l'objet tel qu'initialement prévu par son constructeur.

Il est donc souhaitable de pouvoir les grouper pour bénéficier de fonctionnalités étendues.

Il existe des solutions pour regrouper des objets connectés.

Par exemple, la demande de brevet US 2014/0241354 A1 décrit un système de communication entre un ou plusieurs groupes d'IoTs. Des groupes d'objets prédéfinis peuvent être formés parce qu'ils effectuent des activités similaires ou répondent à certains contextes (emplacement, présence du propriétaire, état des appareils, utilisation d'une ressource commune, etc.). En outre, les groupes d'IoT peuvent être organisés de manière hiérarchique afin d'assurer une communication efficace dans les groupes et entre différents groupes.

Le document « Access Control in IoT : From Requirements to a Candidate Vision » de Dina Hussein, Emmanuel Bertein and Vincent Frey, url : https://ieeexplore.ieee.org/document/7899435, publié le 7 mars 2017 [extrait le 21-04-2017], analyse les spécifications principales permettant d'effectuer un contrôle d'accès pour des objets de l'IoT, selon la littérature, et propose une architecture de contrôle d'accès pour prendre en compte ces spécifications. Selon cette architecture, le contrôle d'accès est administré au niveau de communautés d'objets IoT grâce à des dispositifs ayant des capacités de ressources et agissant au nom des autres nœuds ayant des capacités limitées dans une communauté d'IoT donnée.

Cependant ces solutions constituent des catalogues d'objets dont le but est d'accéder plus rapidement aux objets connectés et de les faire communiquer plus simplement. Les objets du groupe restent indépendants les uns des autres.

Il existe aussi des solutions pour créer des scénarios impliquant plusieurs objets domestiques. Par exemple, la demande de brevet US 2014/0241354 A1 propose un scénario selon lequel plusieurs objets connectés sont utilisés pour fournir une température donnée à un utilisateur donné : lorsqu'un utilisateur entre dans une pièce, sa tablette personnelle est détectée puis la température est contrôlée et ajustée en fonction des préférences de l'utilisateur. Ce scénario fait intervenir au moins trois objets connectés qui peuvent avantageusement être regroupés : un objet pour détecter la présence de l'utilisateur, un capteur de température et un élément de chauffage/air conditionné pour l'ajuster.

Ces solutions constituent des scénarios dont le but est de rendre un service en enchaînant les actions des objets connectés d'un groupe. Cependant, les objets du groupe restent indépendants les uns des autres.

Ceci pose un certain nombre de problèmes : tout d'abord, le groupe est considéré comme une collection et non comme une agrégation d'objets. De surcroît, toutes les caractéristiques des objets ainsi groupés restent accessibles au propriétaire et aux utilisateurs du groupe, ce qui n'est pas souhaitable. Par exemple, dans le scénario précédent, si l'objet utilisé pour détecter la présence de l'utilisateur dans la pièce est une caméra, il n'est pas forcément souhaitable qu'un utilisateur quelconque du groupe accède à toutes les fonctions de la caméra, mais uniquement au résultat de la détection.

Le document « Logistic Model to Support Service Modularity for the Promotion of Reusability in a Web Objects-Enabled IoT Environment" de Muhammad Golam Kibria, Sjjad Ali, Muhammad Aslam Jarwar, Sunil Kumar et Ilyoung Chong, publié le 22 septembre 2017 [extrait le 26-02-2019], met en avant le nombre très large d'objets connectés virtuels et la nécessité de réutiliser ces objets virtuels existants et des objets composites virtuels. Il propose un modèle logistique sur lequel s'appuyer pour des recherches de similarités visant à une réutilisabilité d'objets IoT du Web.

L'invention offre une solution ne présentant pas les inconvénients de l'état de la technique.

### L'invention

L'invention concerne un procédé de création d'un objet groupe virtuel selon la revendication 1, un procédé de mise en œuvre d'un objet groupe virtuel dans un réseau de
communications selon la revendication 8, leurs dispositifs correspondants de création et de mise en œuvre selon les revendications 9 et 10, une passerelle domestique selon la revendication 11, et un programme d'ordinateur selon la revendication 13. Les revendications dépendantes définissent des modes de réalisation préférés de l'invention.

La présente divulgation a également pour objet un procédé d'agrégation d'au moins deux objets connectés d'un réseau de communications, lesdits objets connectés possédant au moins une caractéristique, dite caractéristique de base, ledit procédé étant caractérisé en ce qu'il comporte les étapes suivantes sur un dispositif d'agrégation, pour obtenir une représentation du groupe, dite avatar groupe, apte à représenter objets connectés à agréger :
- obtention d'au moins une caractéristique de base desdits objets connectés ;
- obtention d'au moins une caractéristique de l'objet groupe, ladite caractéristique étant liée à au moins une caractéristique de base desdits objets connectés ;
- création de l'avatar groupe, ledit avatar comportant :
   - au moins une première structure de données pour lesdits objets connectés, dite structure de base, comportant ladite au moins une caractéristique de base ;
   - une seconde structure de données, dite structure de groupe, comportant ladite au moins une caractéristique de l'objet groupe ;
   - une troisième structure de données, dite structure de liens, pour lier ladite caractéristique de l'objet groupe à au moins une caractéristique de base ;
   - une structure de gestion d'adresses, dite proxy groupe, comportant au moins une correspondance entre au moins une adresse de l'avatar groupe et au moins une adresse desdits objets connectés.

Par « objet connecté », on entend ici toute entité physique ou logique apte à rendre un service à un utilisateur dans un réseau de communications, par exemple :
- équipements personnels connectables (*smartphone,* montre connectée, casque connecté, équipement domotique, etc.) ;
- équipements de l'espace public auxquels l'utilisateur peut avoir accès ;
- contenus (films, musique) et accès à des contenus.

Un objet connecté comporte un ensemble de caractéristiques :
- fonctions (donner l'heure, la température, *streamer* un flux vidéo, etc.) ;
- flux associés aux fonctions en entrée ou en sortie de l'objet : commandes, réponses, messages, flux de données, par exemple audiovisuels, etc. On considère ici le terme « flux » au sens large. Par exemple, un message (commande, requête, réponse, acquittement, etc.) est un flux de données limité dans le temps.

Par « agrégation », on entend la création d'un objet groupe (virtualisé) associé à plusieurs objets connectés, l'objet groupe disposant d'une adresse pour accéder à chacun des objets connectés. L'objet groupe, après sa création, offre, ou expose, ses propres caractéristiques qui peuvent correspondre à toute combinaison des caractéristiques des objets connectés (amélioration, mise en cascade, coopération, etc.)

Par « objet groupe », on entend un objet qui comporte les objets connectés et leur encapsulation selon la présente invention, c'est-à-dire un avatar des objets. L'avatar est appelé « avatar groupe ».

Par « avatar groupe», on entend une représentation, ou encapsulation de plusieurs objets ; l'avatar groupe comprend donc :
- une ou plusieurs caractéristiques (fonctions et flux) de chacun des objets du groupe ;
- une ou plusieurs caractéristiques (fonctions et flux) propres de l'objet groupe ;
- un ensemble de liens, ou fonctions, pour lier (combiner, exploiter, etc.) ensemble une ou plusieurs caractéristiques des objets de base et des objets du groupe ;
- une structure proxy pour permettre à un utilisateur du groupe d'accéder à chacun des objets connectés via au moins une adresse de l'objet connecté. Par adresse de l'objet connecté, on entend n'importe quel type d'adresse correspondant à l'accès de tout ou partie des caractéristiques de l'objet connecté. Une telle adresse peut être physique (http://192.145.1.1) ou symbolique (zoom.ov3@mypasserelle.fr pour accéder à la fonction zoom de l'objet caméra via la passerelle domestique). Elle peut prendre la forme d'une adresse universelle (URI, URL), d'une adresse IP, etc.

Selon la divulgation, les fonctions accessibles ou les flux générés de l'objet groupe sont encapsulés dans un objet virtualisé, dit avatar groupe, de manière à ce que les objets connectés soient en quelque sorte cachés derrière l'objet groupe et son avatar. L'objet connecté peut par ailleurs rester accessible directement, ou faire partie d'un autre groupe, d'une collection, etc.

Avantageusement, un utilisateur de l'objet groupe n'y accède pas directement mais via son avatar groupe. L'utilisateur peut donc invoquer l'avatar groupe pour accéder aux objets connectés du groupe. L'objet groupe, c'est-à-dire l'entité formée par les objets connectés et leur avatar groupe, met en œuvre les caractéristiques des objets connectés et les caractéristiques propres de l'objet groupe.

Par exemple, une webcam peut être associée à un thermomètre et/ou une horloge et/ou un détecteur de mouvement. Selon un autre exemple, l'ensemble des objets communicants d'une salle de réunion, d'une chambre, d'une maison, etc. peuvent être regroupés dans un objet virtuel « salle de réunion » « ma chambre », « ma maison », etc.

Avantageusement, les objets connectés du groupe ne sont pas une simple collection mais sont liés de manière à former un nouvel objet (groupe) qui remplit par exemple une fonction d'automate en s'appuyant sur les flux d'entrée-sortie de plusieurs objets en cascade. Par exemple, si la caméra et le détecteur de mouvement mentionnés ci-dessus font partie d'un même groupe, on peut imaginer que la détection d'un mouvement par le détecteur déclenche la capture d'image fixe de la caméra qui fournit en sortie une image (photographie) de la personne détectée. Un lien est donc créé entre les deux objets du groupe de manière à offrir une fonction propre à l'objet groupe (détecter une personne).

Selon un mode de mise en œuvre particulier de la divulgation, le procédé d'agrégation tel que décrit ci-dessus est caractérisé en ce en ce que l'avatar groupe comporte en outre une structure de données, dite structure de droits, comportant au moins un droit associé à une caractéristique et en ce que le procédé comporte en outre :
- une étape d'obtention d'au moins un droit associé à une caractéristique ;
- une étape d'inscription dudit droit dans ladite structure de l'avatar groupe.

Avantageusement selon ce mode, il est possible de bénéficier d'un contrôle des droits sur l'objet groupe et/ou des objets connectés du groupe. Ainsi, un droit peut être accordé pour une caractéristique de l'objet groupe ou d'un objet du groupe de manière à ce que le propriétaire maîtrise les droits des utilisateurs sur son objet groupe et les objets connectés le constituant. Par exemple, le propriétaire peut avoir tous les droits mais accorder à un utilisateur de l'objet groupe seulement les droits sur les caractéristiques de l'objet groupe mais pas sur les caractéristiques des objets connectés le constituant, l'utilisateur distinct du propriétaire ne pouvant dans ce cas mettre en œuvre la caractéristique (fonction ou flux) de l'objet connecté.

Selon une variante de ce mode de mise en œuvre particulier de la divulgation, le procédé d'agrégation tel que décrit ci-dessus est caractérisé en ce que la structure de droits comporte en outre une identification d'au moins un bénéficiaire du droit et en ce que le procédé comporte en outre :
- une étape d'obtention dudit au moins un bénéficiaire du droit associé à une caractéristique ;
- une étape d'inscription dudit au moins un bénéficiaire dans ladite structure de l'avatar groupe.

Avantageusement selon ce mode, le propriétaire de l'objet groupe et/ou des objets connectés peut les partager avec un autre utilisateur ou un groupe d'utilisateurs. Un tel groupe peut désigner par exemple un groupe d'utilisateurs du réseau local, ou du réseau étendu, ou se trouvant dans une certaine proximité géographique, ou des utilisateurs identifiés nominativement, etc. Ceci permet de discriminer simplement les utilisateurs qui ont le droit d'utiliser/composer/transmettre un objet de ceux qui ne l'ont pas.

Selon une autre variante de ce mode de mise en œuvre particulier de la divulgation, qui pourra être mise en œuvre alternativement ou cumulativement avec la précédente, le procédé d'agrégation tel que décrit ci-dessus est caractérisé en ce que ledit droit est un droit d'usage permettant de mettre en œuvre la caractéristique associée.

Avantageusement selon ce mode, le propriétaire de l'objet groupe et/ou des objets connectés peut les partager avec un autre utilisateur ou un groupe d'utilisateurs pour leur mise en œuvre, soit dans l'objet groupe, soit en tant qu'objet connecté. Ainsi certaines caractéristiques pourront être mises en œuvre et d'autres non.

Selon une autre variante de ce mode de mise en œuvre particulier de la divulgation, qui pourra être mise en œuvre alternativement ou cumulativement avec les précédentes, le procédé d'agrégation tel que décrit ci-dessus est caractérisé en ce que ledit droit est un droit de composition permettant d'utiliser un objet du groupe ou l'objet groupe dans un nouvel objet groupe.

Avantageusement selon ce mode, le propriétaire de l'objet groupe et/ou des objets connectés peut autoriser un autre utilisateur ou un groupe d'utilisateurs à composer son propre objet groupe à partir de l'objet groupe ou des objets connectés qui le constituent.

Selon une autre variante de ce mode de mise en œuvre particulier de la divulgation, qui pourra être mise en œuvre alternativement ou cumulativement avec les précédentes, le procédé d'agrégation tel que décrit ci-dessus est caractérisé en ce que ledit droit est un droit de transmission permettant de transmettre un droit d'usage ou de composition

Avantageusement selon ce mode, le propriétaire de l'objet groupe et/ou des objets connectés peut autoriser un autre utilisateur à transmettre les droits d'usage et de composition à un utilisateur ou un groupe d'utilisateurs tiers.

Selon une autre variante de ce mode de mise en œuvre particulier de la divulgation, qui pourra être mise en œuvre alternativement ou cumulativement avec les précédentes, le procédé d'agrégation est caractérisé en ce que l'étape d'obtention est une étape de déduction du droit associé à une caractéristique de l'objet groupe en fonction d'au moins un droit associé à une caractéristique de base.

Avantageusement selon ce mode, un droit ayant été accordé à une caractéristique de l'un des objets connectés (par exemple la caméra), un droit sur l'objet groupe peut en être déduit automatiquement. Par exemple, l'objet groupe peut hériter directement des droits de la caméra, ou d'une combinaison des droits de la caméra et du détecteur de mouvement, ou hériter du droit le plus restrictif, le plus large, de l'un des objets connectés, etc.

Selon une autre variante de ce mode de mise en œuvre particulier de la divulgation, qui pourra être mise en œuvre alternativement ou cumulativement avec la précédente, le procédé d'agrégation tel que décrit ci-dessus est caractérisé en ce qu'il comporte en outre une étape de déduction du droit associé à une caractéristique de base en fonction d'au moins un droit associé à une caractéristique du groupe.

Avantageusement selon cette variante, un droit ayant été accordé à l'une des caractéristiques de l'objet groupe (par exemple, le détecteur de personne), les objets connectés qui constituent le groupe (par exemple la caméra) peuvent en être déduits automatiquement. Par exemple, l'objet caméra peut hériter directement du droit de l'objet groupe « détecteur de personne ».

Selon un autre aspect fonctionnel, la divulgation concerne aussi un procédé de mise en œuvre d'un objet groupe agrégeant au moins deux objets connectés dans un réseau de communications, ledit objet groupe comportant un avatar groupe, le procédé étant caractérisé en ce qu'il comporte les étapes suivantes sur un dispositif de mise en œuvre de l'objet groupe :
- obtention d'un message pour utiliser l'objet groupe, ledit message comportant au moins une caractéristique de l'objet groupe à mettre en œuvre ;
- obtention de l'avatar de l'objet groupe, ledit avatar comportant au moins :
   - une première structure de données, dite structure de base, comportant ladite au moins une caractéristique de base de chacun des objets connectés agrégés ;
   - une seconde structure de données, dite structure de groupe, comportant au moins une caractéristique de l'objet groupe ;
   - une troisième structure de données, dite structure de liens, pour lier ladite caractéristique de groupe à au moins une caractéristique de base ;
   - une structure de gestion d'adresses, dite proxy groupe, comportant une correspondance au moins entre au moins une adresse de l'avatar groupe et au moins une adresse desdits objets connectés agrégés.
- comparaison de la caractéristique de groupe à mettre en œuvre aux caractéristiques de l'avatar groupe ;
- en fonction des résultats de la comparaison :
   - analyse de la caractéristique de l'objet groupe à mettre en œuvre ;
   - obtention, dans la structure de lien, du lien de ladite caractéristique de groupe à au moins une caractéristique de base ;
   - mise en œuvre de ladite au moins une caractéristique de base d'un objet connecté.

Les objets selon cet aspect fonctionnel de la divulgation procurent au moins les mêmes avantages que ceux procurés par le procédé selon le premier aspect fonctionnel. Les caractéristiques optionnelles évoquées pour le premier aspect peuvent aussi s'appliquer. Notamment, l'objet groupe encapsule les objets connectés du groupe de manière à pouvoir accéder aux caractéristiques (fonctions et flux) des objets connectés grâce à l'avatar groupe. Aussi, des droits de mise en œuvre, composition, transmission peuvent être insérés dans la structure de l'objet groupe et utilisés par le procédé de mise en œuvre de l'objet groupe via une étape d'analyse desdits droits. Le droit de l'utilisateur qui a fait la requête est comparée au droit associé à la caractéristique. Si l'utilisateur ne dispose pas du droit d'utilisation (resp. composition, transmission) sur la caractéristique requise, elle n'est pas mise en œuvre.

Selon un aspect matériel, la divulgation concerne également un dispositif d'agrégation d'au moins deux objets connectés d'un réseau de communications, lesdits objets connectés possédant au moins une caractéristique, dite caractéristique de base, ledit dispositif étant caractérisé en ce qu'il comporte les modules suivants, pour obtenir une représentation du groupe, dite avatar groupe, apte à représenter lesdits objets connectés à agréger :
- un module d'obtention d'au moins une caractéristique de base desdits objets connectés ;
- un module d'obtention d'au moins une caractéristique de l'objet groupe, ladite caractéristique étant liée à au moins une caractéristique de base desdits objets connectés ;
- un module de création de l'avatar groupe, ledit avatar comportant :
   - au moins une première structure de données pour lesdits objets connectés, dite structure de base, comportant ladite au moins une caractéristique de base ;
   - une seconde structure de données, dite structure de groupe, comportant ladite au moins une caractéristique de l'objet groupe ;
   - une troisième structure de données, dite structure de liens, pour lier ladite caractéristique de groupe à au moins une caractéristique de base ;
   - une structure de gestion d'adresses, dite proxy groupe, comportant au moins une correspondance entre au moins une adresse de l'avatar groupe et au moins une adresse desdits objets connectés.

Le terme module utilisé dans la présente description peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.)

Selon un autre aspect matériel, la divulgation concerne également un dispositif de mise en œuvre d'un objet groupe agrégeant au moins deux objets connectés et disposant d'un avatar groupe dans un réseau de communications, le dispositif de mise en œuvre comportant :
- un module d'obtention d'un message pour utiliser l'objet groupe, ledit message comportant au moins une caractéristique de l'objet groupe à mettre en œuvre ;
- un module d'obtention de l'avatar de l'objet groupe, ledit avatar comportant au moins :
   - une première structure de données, dite structure de base, comportant ladite au moins une caractéristique de base desdits objets connectés ;
   - une seconde structure de données, dite structure de groupe, comportant au moins une caractéristique de l'objet groupe ;
   - une troisième structure de données, dite structure de liens, pour lier ladite caractéristique de groupe à au moins une caractéristique de base ;
   - une structure de gestion d'adresses, dite proxy groupe, comportant une correspondance au moins entre au moins une adresse de l'avatar groupe et au moins une adresse desdits objets connectés agrégés ;
- un module de comparaison de la caractéristique de groupe à mettre en œuvre aux caractéristiques de l'avatar groupe ;
- un module d'analyse de la caractéristique de l'objet groupe à mettre en œuvre ;
- un module d'obtention, dans la structure de lien, du lien de ladite caractéristique de groupe à au moins une caractéristique de base ;
- un module de mise en œuvre de ladite au moins une caractéristique de base.

Selon un autre aspect matériel, la divulgation concerne également une passerelle domestique comprenant un dispositif d'agrégation et/ou un dispositif de mise en œuvre d'un objet groupe tels que décrits auparavant.

Selon un autre aspect matériel, la divulgation concerne également un objet groupe comportant :
- au moins deux objets connectés disposant d'au moins une caractéristique de base et une adresse ;
- un avatar dudit objet groupe, comprenant :
   - au moins une première structure de données, dite structure de base, comportant ladite au moins une caractéristique de base desdits objets connectés agrégés ;
   - une seconde structure de données (SD_OG), dite structure de groupe, comportant au moins une caractéristique de l'objet groupe ;
   - une troisième structure de données, dite structure de liens, pour lier ladite caractéristique de groupe à au moins une caractéristique de base ;
   - une structure de gestion d'adresses, dite proxy groupe, comportant une correspondance au moins entre au moins une adresse de l'avatar groupe et au moins une adresse desdits objets connectés agrégés.

Selon un autre aspect matériel, la divulgation concerne encore un programme d'ordinateur apte à être mis en œuvre sur un dispositif d'agrégation tel que décrit ci-dessus, le programme comprenant des instructions de code qui, lorsque le programme est exécuté par un processeur, réalise les étapes du procédé d'agrégation défini au-dessus.

Selon un autre aspect matériel, la divulgation concerne encore un programme d'ordinateur apte à être mis en œuvre sur un dispositif de mise en œuvre tel que décrit ci-dessus, le programme comprenant des instructions de code qui, lorsque le programme est exécuté par un processeur, réalise les étapes du procédé de mise en œuvre d'un objet groupe défini au-dessus.

Selon encore un autre aspect matériel, l'invention a trait à un support d'enregistrement lisible par un processeur de données sur lequel est enregistré un programme comprenant des instructions de code de programme pour l'exécution des étapes de l'un quelconque des procédés définis ci-dessus.

Les objets selon les aspects matériels de l'invention procurent au moins les mêmes avantages que ceux procurés par le procédé selon le premier aspect fonctionnel. Les caractéristiques optionnelles évoquées pour le premier aspect peuvent s'appliquer aux aspects matériels.

L'invention sera mieux comprise à la lecture de la description qui suit, donnée à titre d'exemple et faite en référence aux dessins annexés.

### Les figures:

La figure 1 représente le contexte général de l'invention, montrant des objets connectés d'un utilisateur d'un réseau local selon l'état de l'art.
La figure 2 illustre la formation d'un objet groupe selon un mode de réalisation de l'invention.
La figure 3 illustre un avatar d'objet groupe selon un mode de réalisation de l'invention.
La figure 4 représente une architecture d'un dispositif d'agrégation d'objets et/ou de mise en œuvre d'objets groupes selon un mode de réalisation de l'invention.
La figure 5 représente un chronogramme d'agrégation d'objets et de mise en œuvre subséquente de l'objet groupe selon un mode de réalisation de l'invention.
La figure 6 représente un mode de mise en œuvre de l'usage des droits sur un objet groupe.

### Description détaillée d'un exemple de réalisation illustrant l'invention

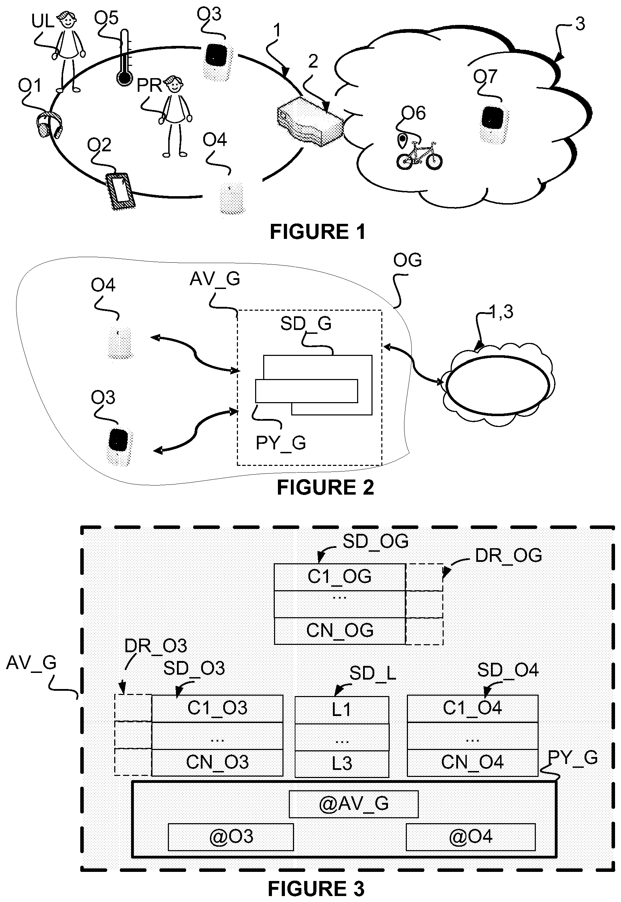

La figure 1 représente le contexte général de l'invention selon l'état de l'art, montrant des objets connectés d'un utilisateur et propriétaire PR d'un réseau local ou LAN (Local Area Network) 1. Selon cet exemple non limitatif, le réseau LAN est un réseau domestique connecté à un réseau de type étendu, ou WAN (Wide Area Network) 3, par exemple un réseau Internet. Plus largement, un réseau LAN pourrait être un réseau d'entreprise ou être limité à un seul objet connecté au réseau Internet (par exemple une Webcam de plage) et le réseau WAN 3 pourrait être de n'importe quel type (cellulaire, GSM - Global System for Mobile Communications, UMTS - Universal Mobile Telecommunications System, Wifi - Wireless, etc.) sans sortir du cadre de l'invention.

Un élément de gestion du réseau (2) (une passerelle résidentielle, professionnelle, un hub, etc.) et des équipements terminaux, appelés dans la suite objets connectés ou plus simplement objets (Oi, pour lequel i indique le numéro de l'objet) sont connectés sur le réseau local 1. Il s'agit respectivement selon l'exemple d'un casque connecté (O1), d'un smartphone (O2), d'une caméra connectée (O3), d'un détecteur de mouvement (O4) et d'un capteur de température (O5). Ces objets sont aptes à communiquer sur le réseau local et peuvent être accédés de l'intérieur ou de l'extérieur du réseau local via la passerelle de service (2).

D'autres objets situés dans le réseau étendu (3) peuvent également présenter un intérêt pour un utilisateur du réseau local, par exemple une bicyclette partagée (O6) ou une caméra de plage (O7).

Selon cet exemple, les objets sont des objets physiques, c'est-à-dire des équipements physiques ayant la capacité de se connecter au réseau. L'objet connecté peut être fournisseur de flux d'informations, en temps réel ou non, et/ou actionneur au sens où le fait de recevoir un flux d'informations particulier (par exemple, de commandes) provoque de sa part une action associée à une fonction. Ces objets peuvent différer par leur système d'exploitation (Windows, Linux, Android, etc.), leur type de connexion au réseau (Ethernet, Wifi, Bluetooth, etc.), et les fonctions/actions dont ils sont capables : mesurer la température, communiquer sur des réseaux sociaux, mettre en œuvre une recette de cuisine, lire un contenu multimédia, enregistrer une vidéo de surveillance, la transmettre, détecter un mouvement, allumer une lampe, etc.

De surcroît, ces objets, peuvent être aussi caractérisés en termes de propriété et d'accès : ils peuvent être personnels, c'est-à-dire qu'ils appartiennent à leur propriétaire PR, ou partagés, c'est-à-dire qu'ils peuvent être mis à disposition d'un autre utilisateur, par exemple un invité du réseau local, ou encore publics, c'est-à-dire qu'ils peuvent être mis à disposition de n'importe qui, etc.

On peut dès maintenant noter que chacun des objets, présentant un certain nombre de caractéristiques (fonctions et/ou flux d'entrée/sortie), pourrait être utilement regroupé avec d'autres objets de caractéristiques complémentaires pour former un nouvel objet. Selon quelques exemples :
- la caméra du réseau local ne dispose pas de logiciel de reconnaissance biométrique ; or il peut être utile d'identifier simplement une personne qui se trouve dans le champ de la caméra.
- la bicyclette du réseau étendu peut être volée ; il peut être utile de la filmer lorsque quelqu'un s'en approche.
- etc.

On va maintenant décrire un mode de réalisation de l'invention à l'appui de la figure 2. Le but est d'offrir à l'utilisateur un objet groupe virtualisé, appelé plus simplement objet groupe, correspondant à un groupe d'objets connectés de son environnement.

Un groupe d'objets est selon cet exemple un regroupement d'objets connectés réalisé à l'initiative de leur propriétaire. Grâce au procédé d'agrégation, ce groupe est considéré comme étant lui-même un objet, aussi appelé un objet groupe, possédant ses propres flux d'informations et ses propres actions.

Selon l'exemple décrit ici à titre indicatif, l'objet caméra (O3) du réseau local de l'utilisateur va être regroupé avec l'objet capteur de mouvement (O4). L'objet résultant (O3+O4) est un objet groupe (OG), c'est-à-dire un objet particulier correspondant aux deux objets connectés mais de caractéristiques propres. A cet effet, l'objet groupe est virtualisé, c'est-à-dire qu'il est représenté comme une entité rendant des fonctions et possédant des flux d'entrée et de sortie. Tous les flux de l'objet groupe passent par un ensemble logiciel assimilable à un proxy, l'avatar objet groupe (AV_G), ou avatar groupe, construit sur les flux issus ou en direction de l'un au moins des objets du groupe. Cet avatar groupe représente le groupe d'objets sur le réseau et expose la fonction de l'objet groupe.

L'avatar est donc une interface « standardisée » avec des capacités qui peuvent être également standardisées (horodatage, température, zoom, etc.). Il s'agit en quelque sorte d'une surcouche des objets du groupe (encapsulation).

Selon une variante, les objets peuvent être regroupés automatiquement selon un critère d'agrégation (localisation, fonctions rendues, types de flux échangeables, etc.), et non plus à l'initiative du propriétaire.

Selon un mode de réalisation de l'invention, qui sera détaillé plus précisément à l'appui des figures suivantes, l'utilisateur choisit de créer un groupe, par exemple, « mon détecteur de personne », noté OG, d'avatar AV_G. Cet objet groupe rend le service suivant : lorsque l'utilisateur rentre dans la pièce dans laquelle se trouve la caméra, le détecteur de mouvement se déclenche, il actionne la caméra qui prend une photographie (capture d'image fixe) de la personne qui est entrée dans la pièce ; cette image en sortie de la caméra est rendue accessible à l'utilisateur de l'objet groupe.

Un dispositif d'agrégation sur la passerelle construit pour le groupe (OG) un avatar groupe (AV_G) qui peut être mis à disposition sur le réseau local 1 et/ou sur le réseau étendu 3. Le groupe comprend le détecteur de mouvement O3 et la caméra O4. C'est lui qui expose l'image de sortie de la caméra.

Chacun des objets connectés comporte un certain nombre de caractéristiques, dont seulement un sous-ensemble est offert à l'utilisateur de l'objet groupe : il n'accède pas au flux de la caméra, ni au détecteur de mouvement, mais seulement à l'image finale de la personne qui est entrée dans la pièce. Il n'accède pas non plus aux autres fonctions de la caméra (zoom, capture vidéo, etc.)

Un tel groupement des objets permet non seulement de créer de nouveaux objets mais aussi d'en suggérer d'autres à l'utilisateur. Selon une variante, l'utilisateur peut être prévenu qu'il peut former un objet détecteur de personne basé sur la caméra et son détecteur de mouvement mais il peut aussi être informé que s'il disposait d'un dispositif de reconnaissance de visage il pourrait identifier la personne qui rentre dans la pièce et accéder directement, non plus à sa photographie mais à son identité.

L'objectif est donc de pouvoir adapter aux besoins de l'utilisateur l'ensemble des objets connectés dont il dispose via un mécanisme de regroupement intelligent.

On notera que si plusieurs accès concurrents se produisent sur le même objet/groupe en provenance d'utilisateurs qui disposent des mêmes droits, toute solution à la portée de l'homme du métier des systèmes informatiques pourra être utilisée pour résoudre le conflit.

La figure 3 représente de manière plus détaillée une architecture possible pour un avatar groupe selon un mode de réalisation de l'invention. Selon cet exemple, l'objet connecté O3 (la caméra) et l'objet connecté O4 (détecteur de mouvement) sont agrégés dans l'objet groupe OG. On notera que la génération de l'avatar (AV_G), tout comme son stockage, peuvent être réalisés sur la passerelle domestique, mais aussi sur un serveur à distance dans le réseau, sur un terminal, etc. L'avatar comporte selon cet exemple :
- une première structure de données (SD_O3) comportant au moins une caractéristique (C1_03... CN_O3) de l'objet connecté 3 (zoom, capture d'image, flux vidéo de sortie, commande de lancement de capture, etc.) ;
- une seconde structure de données (SD_O4) comportant au moins une caractéristique (C1_04... CN_O4) de l'objet connecté 4 (détection de mouvement, type de mouvement, information de mouvement détecté, etc.) ;
- une structure de gestion d'adresses, dite proxy (PY_G) comportant une correspondance entre une au moins une adresse de l'avatar (@AV_G) et au moins une adresse de chaque objet connecté (@O3, @O4). On rappelle que l'adresse peut être de n'importe quel type et adresser tout ou partie des caractéristiques de l'un des objets connectés. L'avatar groupe agit comme un proxy entre l'objet connecté et les requêtes qui lui sont faites. On rappelle qu'un proxy (PY) est un composant logiciel qui joue le rôle d'intermédiaire en se plaçant entre deux entités pour faciliter les échanges. En l'occurrence, le proxy (PY_G) de l'avatar est placé entre l'utilisateur de l'objet groupe, par exemple un site Web accessible sur un smartphone, et les objets connectés sur le LAN/WAN. Le proxy redirige les flux de manière transparente pour l'utilisateur, vers et depuis les objets connectés du groupe. De manière structurelle :
   - soit l'objet groupe a son propre proxy ; de manière schématique dans ce cas l'objet sera accessible via une adresse de type /*mon_détecteur_de_personne ;*
   - soit il est rattaché à un proxy qui comporte un ensemble d'avatars ; de manière schématique dans ce cas l'objet sera accessible via une adresse de type *proxy_objets_groupes*/*ma_chambre*/ *mon_détecteur_de_personne* (et un autre objet du même type, par exemple dans le salon, sera accessible via *proxy_objets_groupes*/*mon_salon*/*mon_détecteur_de_personne* ).

On parle dans la suite de module proxy pour désigner l'une ou l'autre de ces possibilités.
- une structure de liens (SD_L) permettant d'établir des liens entre les objets du groupe. On entend par lien un processus automatique qui permet d'émettre des flux d'informations résultants d'une combinatoire de flux ou d'états des objets liés entre eux dans le groupe, ou de traiter de tels flux d'informations. Un lien est donc un programme ou ensemble de programmes doté d'entrées et de sortie ; les entrées sont typiquement les flux sortant des objets connectés, les sorties sont des flux qui peuvent être utilisés pour alimenter un autre objet connecté du groupe ou être mis à disposition de l'utilisateur. Selon l'exemple mentionné plus haut :
   - un lien L1 de la structure SD_L correspond à un programme qui accède à la sortie du capteur de mouvement et déclenche la caméra ;
   - un lien L2 récupère en sortie de la caméra une identification (image fixe) de la personne qui est rentrée dans la pièce ;
   - un lien L3 pourrait transmettre cette image à un module de reconnaissance faciale et récupérer le nom de la personne reconnue, puis le mettre à disposition de l'utilisateur.
- Une structure SD_OG pour héberger les caractéristiques (C1_OG, C2_OG... CN_OG) de l'objet groupe. L'objet groupe créé à partir de plusieurs objets connectés peut bénéficier des caractéristiques de ces objets (le flux de sortie de la caméra) et/ou en proposer de nouvelles (le détecteur de personnes).

L'avatar peut comporter d'autres données, notamment
- une identification (ID_O3, ID_O4) de chaque objet connecté ;
- une identification, description, etc. de l'objet groupe ;
- une ou plusieurs structures de données (DR_) des droits utilisateur, au niveau de l'objet groupe (DR_OG) ou des objets encapsulés (DR_03, DR_04) ;
- etc.

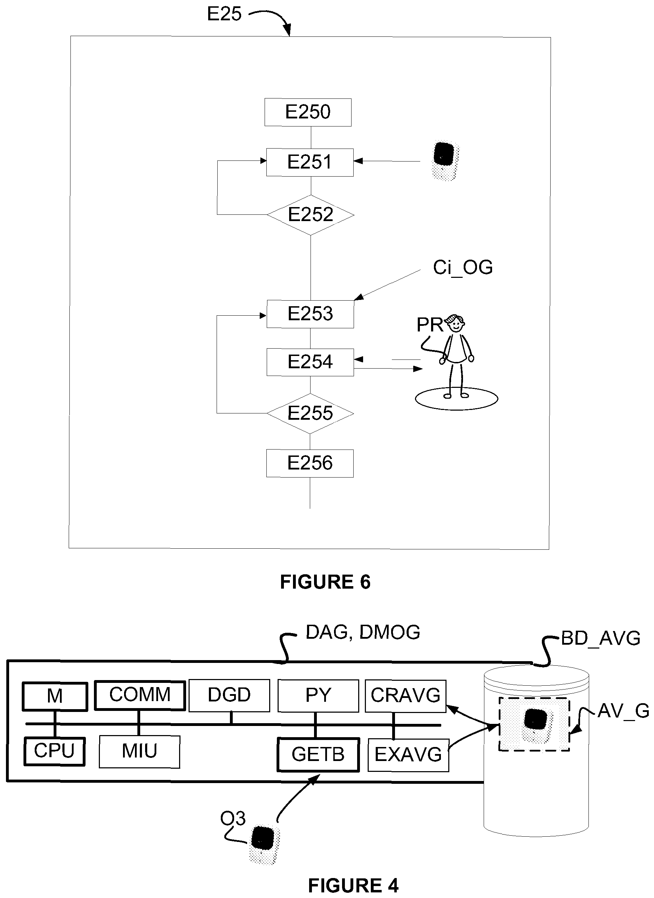

La figure 4 représente une architecture d'un dispositif d'agrégation d'objets et/ou de mise en œuvre d'objets groupe selon un mode de réalisation de l'invention. Il est situé par exemple sur la passerelle domestique. Il peut alternativement être situé dans le cloud, sur un dispositif quelconque du réseau local, etc.

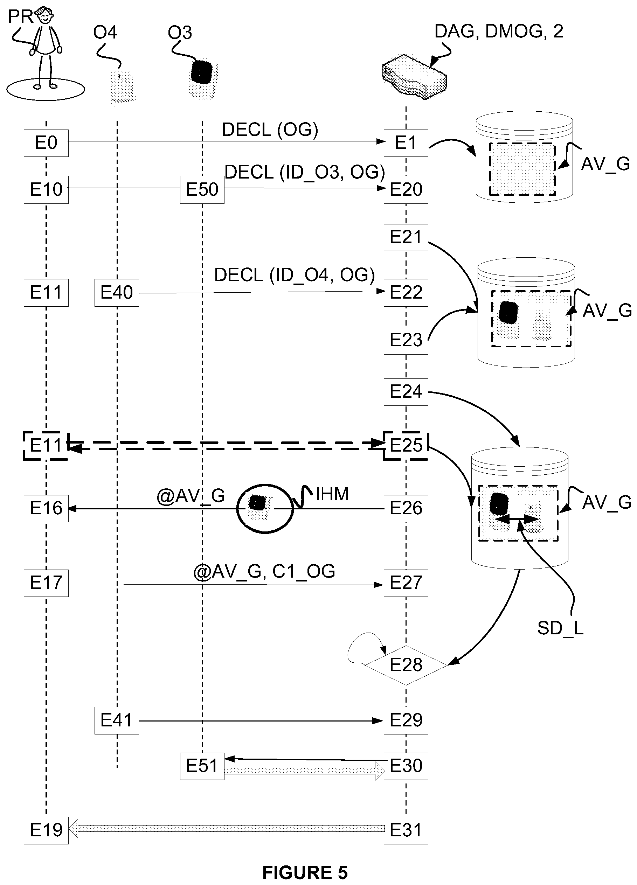

Le dispositif d'agrégation (DAG) comprend :
- des mémoires (M) associées à un processeur (CPU). Les mémoires peuvent être de type ROM (de l'anglais *Read Only Memory*) ou RAM (de l'anglais *Random Access Memory*). Elles peuvent prendre la forme d'une carte amovible (SD, flash, etc.). Une partie de la mémoire M peut contenir notamment, selon l'invention, les avatars correspondant aux objets groupe, les programmes nécessaires à leur agrégation et mise en œuvre, etc.
- un module de communication (COMM), pour la communication avec les objets connectés, avec l'utilisateur, et avec différentes entités du réseau local et ou/étendu ; ce module peut être de type WiFI, Bluetooth, ETHERNET etc. et utiliser tout protocole adéquat pour dialoguer avec ces entités (http, RTP, ...) ;
- un module d'obtention des caractéristiques de base (GETB), permettant par exemple de découvrir un objet physique dont la référence lui est communiquée (par exemple, une caméra) et en déduire les caractéristiques de base (fonctions et flux) pertinentes de l'objet ;
- un module de génération d'avatars groupe (CRAVG) en charge d'agréger les objets qui lui sont fournis, c'est-à-dire de générer un avatar pour un objet groupe.
- un module de gestion de proxys (PY) qui permet d'associer une structure proxy (PY_G) à un (ou plusieurs) avatar d'objet groupe et par la suite de gérer les flux vers et en provenance des objets connectés qui en font partie.
- un module de mise en œuvre des avatars groupe (EXAVG) qui permet, une fois l'objet groupe agrégé, c'est-à-dire son avatar créé, d'accéder à l'objet groupe via les caractéristiques qui en sont connues. On notera que pour des raisons de simplification, le module EXAVG a été placé sur le dispositif d'agrégation. Cependant il pourrait faire partie d'un dispositif de mise en œuvre (DMOG) des avatars groupe distinct du dispositif d'agrégation DAG.
- une base d'avatars groupe (BD_AVG) ; cette base peut se situer sur le dispositif de virtualisation ou à l'extérieur. Elle contient les avatars d'objets groupe.
- un module d'interface utilisateur (MIU), pour rendre disponible, ou exposer, à l'utilisateur, une adresse d'accès (@AV_G) aux avatars groupe (AV_G) et les caractéristiques des avatars groupe (par exemple sous la forme d'un objet graphique ou IHM qui peut être transmis à l'utilisateur, comme représenté à la figure 5 suivante : représentation de l'objet groupe sous forme de pictogrammes et fonctions associées).
- un module DGD de gestion des droits pour initialiser et maintenir les structures de droits (DR) sur les objets.

La figure 5 représente un chronogramme d'agrégation d'objets connectés dans un objet groupe et de mise en œuvre subséquente de l'objet groupe.

Elle détaille en particulier la création d'un avatar d'objet groupe (AV_G) sur le dispositif d'agrégation d'objets DAG, situé selon cet exemple sur une passerelle domestique, et l'utilisation ultérieure de cet objet groupe par son propriétaire. Elle comprend les phases principales de création de l'objet groupe (déclaration de l'objet groupe, création de son avatar), d'agrégation des objets connectés dans l'objet groupe, d'exposition de l'objet groupe (sa mise à disposition de l'utilisateur) puis de mise en œuvre de l'objet groupe selon des exemples.

Selon ce mode de réalisation, les dispositifs d'agrégation (DAG) et de mise en œuvre des objets groupe (DMOG) se trouvent sur la passerelle de service. Toute autre localisation de l'un et/ou l'autre de ces deux dispositifs pourrait être envisagée : dans le réseau local, dans le réseau étendu, portés par un serveur, un terminal, un objet connecté, etc.

### 1. création de l'objet groupe

Le but de cette phase est de créer un objet groupe (OVG) représentant un ou plusieurs objets connectés (O3, O4). On rappelle que l'objet groupe correspond à l'ensemble des objets connectés du groupe et son avatar. Selon cet exemple c'est l'utilisateur (PR), qui est aussi le propriétaire des objets du réseau local, qui choisit de créer un groupe, selon l'exemple précédemment cité, l'objet OG « mon détecteur de personne » en regroupant l'objet caméra O3 et l'objet détecteur O4 dans le groupe OG. Il sélectionne par exemple une représentation graphique des deux objets à l'écran et les glisse dans le nouvel objet groupe «mon détecteur de personne».

Lors d'une étape E0, l'utilisateur déclare un groupe OG (nom, identifiant, etc.). Sa requête DECL(OG) est reçue par le dispositif d'agrégation lors d'une étape E1. Il crée un avatar groupe (AV_G) pour l'objet groupe qui vient d'être déclaré. En particulier, il lui affecte une adresse (@AV_G) et un identifiant (ID_G). Par la suite, l'avatar groupe est accessible via cette adresse. Il peut se trouver sur la passerelle, ou dans le réseau de l'opérateur si la passerelle domestique est virtualisée, ou encore dans le réseau étendu (cloud), à condition de mettre en œuvre une liaison sécurisée entre l'avatar groupe qui se trouve dans le réseau et les objets connectés correspondants dans le réseau local.

### 2. agrégation des objets connectés dans l'objet groupe

On suppose que l'utilisateur (PR) a déjà connecté au réseau les objets connectés qui vont constituer le groupe. Les objets sont donc connus de la passerelle domestique, via une adresse, un identifiant, ou selon une variante qui sera détaillée plus tard, via un avatar de l'objet connecté.

Lors d'une étape E10/E50, l'utilisateur et propriétaire PR déclare un premier objet connecté à agréger dans l'objet groupe. Selon cet exemple, il s'agit d'une caméra connectée (03) du réseau local. L'objet connecté à agréger est donc physique. N'importe quel autre objet pourrait être considéré sans perte de généralité, comme décrit à l'appui de la figure 1. Plusieurs méthodes peuvent être utilisées :
- l'objet connecté se déclare lui-même auprès de la passerelle de service (en fournissant le nom de la caméra, son modèle, etc.) ;
- l'utilisateur rentre lui-même les caractéristiques de l'objet ;
- etc.

Lors d'une étape E20, le dispositif d'agrégation reçoit la déclaration de l'objet sous la forme schématique DECL(ID_O3, OG) c'est-à-dire une identification de l'objet et du groupe dans lequel il doit être inséré. Puis il obtient les caractéristiques de l'objet (physique ou virtuel) qui vient d'être déclaré. Pour obtenir ces caractéristiques, la passerelle (module GETB) peut selon les cas :
- interroger la passerelle qui a enregistré l'objet ;
- interroger un site de référencement de l'objet pour recevoir ses caractéristiques de fonctions et de flux (par exemple, le site du constructeur pour une caméra) ;
- recevoir cette information de la part de l'objet connecté ou de son propriétaire.

A l'issue de cette étape, le dispositif d'agrégation connaît les caractéristiques (flux et fonctions) de l'objet.

Lors d'une étape E21, le dispositif d'agrégation (DAG, CRAVG) insère l'objet dans l'avatar groupe AV_G. L'avatar groupe est une représentation logicielle de l'objet groupe qui comporte les fonctions et les flux des objets connectés qui le constituent et en met certains à disposition pour l'utilisateur de l'objet groupe. Lors de cette étape, une structure est donc créée (SD_O3) pour les caractéristiques de base de l'objet connecté. Par ailleurs, l'objet groupe est associé à un proxy permettant de faire le lien entre les adresses de l'objet groupe et les adresses de l'objet connecté. Un exemple est donné de manière schématique dans la table 1 ci-dessous pour laquelle :
- la première ligne indique l'identifiant et le nom de l'objet groupe (ID_G, « détecteur de personne » ;
- la seconde ligne comporte le proxy PY_G, qui comporte au moins une adresse de l'objet connecté (@O3) et une adresse de l'objet groupe (@AV_G) ;
- les lignes suivantes correspondent à la structure de l'objet O3 : Identifiant de l'objet, fonctions et flux de bases (caractéristiques).

**Table 1 : exemple d'avatar d'objet groupe après création et insertion du premier objet**

| Objet groupe ID_G « détecteur de personne » | | | | |
|---|---|---|---|---|
| Proxy (PY_G) : @O3 <=>@AV_G | | | | |
| Structure de donnée objet caméra (SD_O3) | | | | |
| *Identifiant* | *fonctions de base* | | *Flux de base* | |
| ID_O3 | C1_O3 | capture image | C4_O3 | image fixe de visage |
| | C2_O3 | zoom | C5_O3 | flux image |
| | C3_O3 | reconnaissance visage | C6_O3 | flux image zoomée |

Selon une variante, l'objet possède déjà un avatar. Dans ce cas, le mécanisme d'insertion est très simple : l'objet est déjà représenté sous forme d'un « avatar » comprenant une structure de données comportant les caractéristiques de l'objet, et un proxy qui contient son adresse. Il suffit d'extraire de l'avatar objet les caractéristiques de fonctions et de flux de l'objet ainsi que son adresse (@O4) pour les recopier dans l'avatar groupe créé précédemment.

Lors d'une étape E11/E40, l'utilisateur déclare un second objet connecté à agréger dans l'objet groupe. Selon cet exemple, il s'agit du détecteur de mouvement (04) du réseau local. L'objet est un objet physique. Selon une variante, l'objet est virtuel et possède déjà un avatar. Le même commentaire que ci-dessus s'applique

Lors d'une étape E22, le dispositif d'agrégation reçoit la déclaration de l'objet et accède à ses caractéristiques et/ou à son avatar.

Lors d'une étape E23, le dispositif d'agrégation (DAG/CRAVG) insère l'objet dans l'avatar groupe. Lors de cette étape, une structure est donc créée (SD_O4) et les caractéristiques de base de l'objet connecté O4 y sont copiées. Par ailleurs, le nouvel objet connecté est associé au proxy permettant de faire le lien entre les adresses de l'objet groupe et les adresses de l'objet connecté. Un exemple est donné dans la table 2 ci-dessous :

**Table 2 : exemple d'avatar d'objet groupe après insertion du second objet**

| Objet groupe « détecteur de personne » | | | | |
|---|---|---|---|---|
| Proxy (PY_G) | | | | |
| @O3, @O4 <=>@AV_G | | | | |
| Structure de données objet caméra (SD_O3) | | | | |
| *Identifiant* | *fonctions de base* | | *Flux de base* | |
| ID_O3 | C1_O3 | capture image | C4_O3 | image fixe de visage |
| | C2_O3 | zoom | C5_O3 | flux image |
| | C3_O3 | reconnaissance visage | C6_O3 | flux image zoomée |

| Structure de données objet détecteur (SD_04) | | | | |
|---|---|---|---|---|
| ID_O4 | C1_O4 | détecteur mouvement | C2_O4 | flux mouvement |
| | | | C3_O4 | commande détection mouvement |
| | | | C4_O4 | flux type de mouvement |

### 3. création de la structure de données de l'objet groupe

### i. caractéristiques résultantes de l'objet groupe

L'objet groupe créé à partir de plusieurs objets connectés peut bénéficier des caractéristiques de ces objets (le flux de sortie de la caméra) et/ou en proposer de nouvelles (le détecteur de personnes) par une opération de combinaison, mise en cascade, enrichissement, etc. des caractéristiques des objets de base. Lors d'une étape E24, une structure SD_OG est créée pour héberger les caractéristiques de l'objet groupe. Selon l'exemple, l'objet groupe possède comme flux d'entrée une commande de détection (C2_OG), comme flux de sortie une image de la personne détectée (C4_OG), et assure la fonction « détection de personne » (C1_OG).

### ii. liens entre les objets connectés de l'objet groupe

Lors de l'étape E24, les objets connectés à l'intérieur d'un groupe sont liés entre eux par des processus automatiques, ou liens (L). Un tel processus peut se présenter sous forme d'un programme informatique qui émet des flux d'informations résultant d'une combinatoire de flux ou d'états des objets liés entre eux dans le groupe, ou traite des flux d'informations en provenance d'objets tiers, ces flux étant répartis dans l'ensemble des objets liés entre eux.

La mise en relation d'objets peut être réalisée « manuellement » par leur propriétaire qui a ainsi la capacité de créer de nouveaux objets groupe en choisissant les liens entre les objets. Dans l'exemple ci-dessus, l'utilisateur souhaite récupérer seulement l'information selon laquelle un utilisateur est rentré dans la pièce ainsi qu'une image fixe de l'utilisateur, le détecteur de mouvement peut être lié à la caméra de la manière suivante : s'il détecte un mouvement, un premier lien (L1) est activé pour déclencher la caméra. Puis sur la caméra un second lien (L2) est activé pour déclencher une acquisition et un traitement de l'image capturée.

Selon une variante, certains objets utilisés dans des situations très communes peuvent être pré-édités avec un ensemble de règles associées, que l'utilisateur peut simplement sélectionner ; une telle règle peut être de type : *si mouvement détecté en sortie du capteur, envoi d'un ordre de déclenchement sur caméra*/ *d'un SMS sur mobile, etc*.). Ils sont alors disponibles dans un catalogue et configurables par le propriétaire. D'autres objets peuvent être plus complexes. Un exemple de liens est montré dans la table ci-dessous représentative de l'objet « détection de personne » selon l'exemple, à l'issue de l'étape E24.

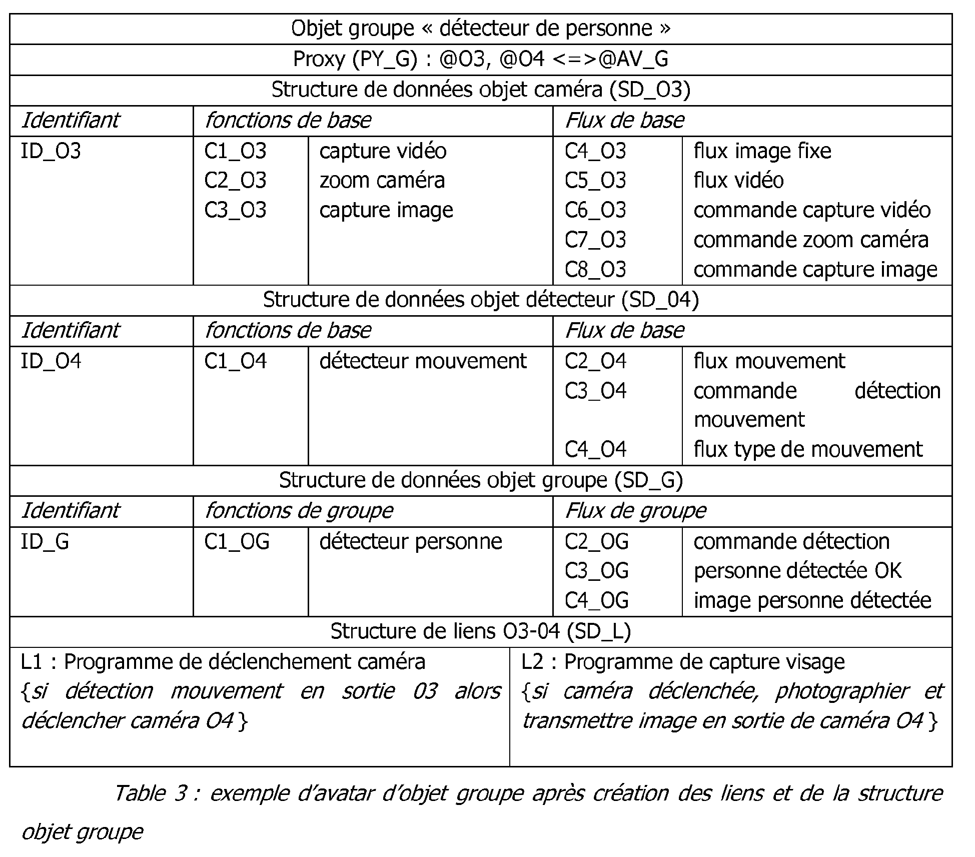

A l'issue de ces étapes, l'objet groupe possède donc un avatar comprenant certaines caractéristiques propres, certaines caractéristiques de base des objets connectés, les autres étant inaccessibles, des liens, un proxy pour y accéder de manière transparente via l'adresse de l'avatar groupe, et éventuellement une représentation graphique.

De manière facultative, l'utilisateur (sur son smartphone) et le proxy peuvent échanger un secret afin de pouvoir communiquer par la suite de manière sécurisée.

### 4. Gestion des droits de l'objet groupe

Lors d'une étape E11-E25, des droits peuvent être mis en œuvre sur l'objet groupe. Cette étape consiste à affecter un type de droit à chacune des caractéristiques de l'objet groupe qui vient d'être créé, ainsi que, le cas échéant, à certaines caractéristiques de base des objets connectés. La caractéristique visée peut être réservée au propriétaire ou partagée avec d'autres personnes. Cet aspect sera discuté plus tard à l'appui de la figure 6.

### 5. Exposition de l'objet groupe (mise à disposition de l'objet)

Lors des étapes E26, E16, le dispositif d'agrégation fournit au propriétaire des objets connectés l'adresse de l'objet groupe, c'est-à-dire l'adresse avatar (@AV_G) contenue dans le proxy de l'avatar. Grâce à cette adresse, par exemple une URL, l'utilisateur peut accéder à l'objet groupe. De manière facultative, l'avatar groupe est également pourvu d'une représentation de l'objet groupe. Cette représentation peut être de n'importe quel type (graphique, textuelle, sonore, etc.). Elle est transmise lors de cette étape, par exemple sur le smartphone de l'utilisateur, qui peut recevoir cette représentation et « voit » alors l'objet groupe sous la forme d'une IHM ; par exemple, la représentation associée à l'objet groupe peut montrer/exposer :
- les fonctions de l'objet : détecter une personne.
- les commandes d'utilisation (par exemple en cliquant sur un bouton, l'utilisateur peut lancer la détection) ;
- le flux de sortie de la caméra (une image fixe);
- etc.

Le propriétaire PR des objets connectés, muni de l'adresse de l'avatar groupe (@AV_G) et éventuellement du secret partagé (S) et d'une représentation (IHM) de l'objet, peut maintenant se connecter à l'avatar groupe, par exemple via l'interface graphique qui s'affiche sur son smartphone. Lorsqu'il veut partager un groupe d'objets dont il est propriétaire, il peut fournir à la personne avec qui il souhaite partager le groupe l'adresse de l'objet groupe. Dans cet exemple de réalisation, l'utilisateur bénéficiant du partage dispose des mêmes droits sur l'objet groupe et sur les objets connectés que le propriétaire. Dans une variante, qui sera détaillé à l'appui de la figure 6, les droits sur les objets sont traités différemment selon l'utilisateur.

### 6. mise en œuvre de l'objet groupe

Selon un exemple de mise en œuvre, le propriétaire, ou un utilisateur auquel il a transmis l'adresse de l'objet groupe, décide, au cours d'une étape E17, de mettre en œuvre l'objet groupe. A cet effet, il prépare un message à destination de l'objet groupe (sur l'adresse @AV_G qui lui a été communiquée précédemment) en demandant une caractéristique spécifique offerte par l'objet groupe, selon cet exemple une détection de personne (C1_OG).

Le dispositif de mise en œuvre de l'objet groupe sur la passerelle (module EXAVG) reçoit ce message lors d'une étape E27. Il interroge la base de données d'avatars groupes pour obtenir l'avatar groupe (AV_G) de l'objet.

Lors de l'étape E28, il analyse la commande reçue, teste la validité de la caractéristique C1 demandée pour le groupe, et teste éventuellement les droits de la personne qui tente d'utiliser l'objet. Il se met donc en attente d'un mouvement susceptible de déclencher la capture de mouvement.

Lors de l'étape E29, il reçoit l'information de mouvement émise par le capteur de mouvement lors d'une étape E41.

Lors de l'étape E30, il exécute le lien L1 correspondant (le programme qui active la capture d'image fixe de la caméra sur détection du mouvement), déclenche la caméra et peut recevoir en réponse le flux de la caméra, symbolisée par une flèche pleine, et le retransmettre lors d'une étape E31 au terminal de l'utilisateur. L'utilisateur reçoit l'image de la personne qui est rentrée dans la pièce.

La figure 6 représente un exemple de mise en œuvre de la distribution des droits sur l'objet groupe. Il s'agit d'un détail de l'étape E25 de la figure précédente lorsque la gestion des droits est mise en œuvre. Naturellement, cette étape E25 pourrait être distribuée entre les différentes étapes de l'algorithme (notamment les étapes E1, E21, E23, E24) de création de l'avatar, sans perte de généralité.

Dans la description précédente on a considéré que tous les objets connectés de l'utilisateur étaient dépourvus de droits spécifiques, ce qui ne pose pas de problème tant que le propriétaire des objets connectés et l'utilisateur de l'objet groupe sont une seule et même personne.

Cependant, il peut être important d'affecter des droits aux différents objets connectés, et aux objets groupes résultants, en fonction des souhaits de leur propriétaire, afin que celui-ci puisse notamment les partager avec un autre utilisateur tout en gardant le contrôle de certaines fonctions.

Dans l'exemple décrit ci-dessus, on peut imaginer que le propriétaire a l'intégralité des droits sur la caméra et sur le capteur de mouvement, mais qu'il souhaite restreindre les droits sur ces objets lorsqu'il les partage. Il souhaite également restreindre les droits sur l'objet groupe.

Comme illustré à l'appui de la table 4 ci-dessous, selon un exemple :
- PR indique le propriétaire, UL un utilisateur quelconque local (par exemple une autre personne du foyer), UD un utilisateur quelconque distant (par exemple sur le réseau internet), PN une personne précise désignée par son nom (par exemple le fils, le voisin, etc. du propriétaire), PG une personne désignée par géolocalisation (par exemple, les habitants de la rue) ;
- chacun de ces utilisateurs potentiels peut avoir les droits sur aucune, une ou plusieurs caractéristiques des objets connectés et/ou de l'objet groupe ; on distingue par ailleurs :
   - les droits d'usage selon lesquels un utilisateur a le droit d'utiliser l'objet ;
   - les droits de composition sur les objets connectés et/ou sur l'objet groupe ; un utilisateur peut en effet avoir le droit d'usage sur certaines caractéristiques de la caméra sans pour autant avoir le droit de réutiliser la caméra pour l'intégrer dans un autre objet groupe.
   - les droits de transmission selon lesquels un utilisateur peut transmettre un des deux droits précédents à un autre utilisateur.

Selon un mode de réalisation, les droits sont indépendants les uns des autres. Selon un autre mode de réalisation, les droits sont imbriqués : les bénéficiaires des droits de transmission sont un sous-ensemble des bénéficiaires des droits de composition qui sont eux-mêmes un sous-ensemble des bénéficiaires des droits d'usage.

On notera que l'objet lui-même peut porter ses droits : il peut proposer ou non d'être composé, utilisé, etc. par un certain type d'utilisateur.

On notera aussi que les droits peuvent être définis par un système de requêtes adressées aux propriétaires des objets de base.

L'analyse de cette table montre que, selon cet exemple :
- le propriétaire (PR) a tous les droits sur toutes les caractéristiques de tous les objets, qu'il s'agisse d'un droit d'usage, de composition ou de transmission ;
- le propriétaire (PR) peut partager (i.e. transmettre les droits) ses objets individuellement (e.g. la caméra) ou sous forme de groupe (e.g. le groupe de détection de personne) ;
- un utilisateur local (UL) a les droits sur certaines caractéristiques de la caméra (capture image ou vidéo, commandes et flux associés) mais pas sur d'autres (zoom, commande et flux associés) ; il a aussi les droits sur la détection de mouvement mais ne peut accéder au flux du mouvement ; il a le droit de réutiliser ces caractéristiques dans un autre objet (droit de composition) ; il n'a pas de droits sur l'objet groupe.
- un utilisateur distant quelconque (UD) n'a le droit qu'à la capture d'image fixe (commande et flux associés) sauf s'il se trouve dans une zone géographique donnée (PG), auquel cas il peut accéder à la vidéo ; il n'a aucun droit d'usage sur la détection de mouvement, ni sur l'objet groupe, ni aucun droit de composition.
- un utilisateur dans une zone géographique donnée (PG), a un droit d'usage sur l'accès à la vidéo de la caméra ; il n'a aucun droit d'usage sur la détection de mouvement, ni sur l'objet groupe, ni aucun droit de composition.
- un utilisateur désigné (PN) peut accéder au détecteur de personnes, mais n'a aucun droit de composition.

Naturellement cet exemple est fourni à titre d'illustration. On a notamment supposé ici que la caméra et le détecteur appartiennent au même utilisateur mais ils pourraient appartenir à deux utilisateurs distincts.

**Table 4 : exemple de table des droits (DR) sur les différents objets et sur le groupe**

| Objet | Caract. | Descriptif | Droits d'usage | Droits de composition | Droits de transmission |
|---|---|---|---|---|---|
| O4 (caméra) | C1_O3 | capture vidéo | PR, UL, PN | PR, UL | PR |
| | C2_O3 | zoom caméra | PR | PR | PR |
| | C3_O3 | capture image | PR, UL, UD, PN | PR, UL | PR |
| | C4_O3 | flux image fixe | PR, UL, UD, PN | PR, UL | PR |
| | C5_O3 | flux vidéo | PR, UL, PG | PR, UL, PG | PR, PG |
| O3 (détecteur de mouvement) | C1_O4 | détecteur mouvement | PR, UL | PR, UL | PR |
| | C2_O4 | | | | |
| | C3_O4 | flux mouvement détecté | PR, UL | PR, UL | PR |
| | | flux type de mouvement | PR | PR | PR |
| OG (détecteur de personnes) | C1_OG | détecteur | PR, PN | PR | PR |
| | C2_OG | personne | PR, PN | PR | PR |
| | C3_OG | commande | PR, PN | PR | PR |
| | C4_OG | détection personne détectée image personne détectée | PR, PN | PR | PR |

Selon une variante, les droits peuvent être propagés selon un ou plusieurs mécanismes de propagation à la portée de l'homme du métier : dans l'exemple de la table précédente, un utilisateur local (UL) a un droit de composition sur un objet, mais n'a pas le droit de transmission de ce droit, c'est-à-dire qu'il ne peut inscrire ce droit dans la table des droits de l'objet qu'il partage.

Selon un exemple similaire, un propriétaire PR qui donne un droit d'usage de sa caméra peut refuser le droit de transmission : ainsi, un utilisateur qui crée un nouvel objet avec la caméra et son propre détecteur n'aura pas le droit de partager la caméra avec un troisième utilisateur (et donc à fortiori il n'aura pas le droit non plus de partager l'utilisation de l'objet qu'il a composé).

Dans un système selon un mode de réalisation, on peut prévoir un mécanisme de requêtes au propriétaire et acceptation de sa part pour obtenir un droit de partage ; dans ce cas les objets peuvent être non-partageables par défaut.

Selon encore un exemple similaire, l'objet groupe hérite systématiquement, ou par défaut, des droits des objets qui le composent, etc.

Selon un autre mode non représenté, les objets connectés héritent systématiquement, ou par défaut, des droits de l'objet groupe les encapsulant.

Toute autre variante de gestion des droits à la portée d'un homme du métier peut être envisagée.

Un procédé selon un mode de réalisation de l'invention exécute les étapes suivantes :
Lors d'une étape E250 initiale, le module DGD de gestion des droits initialise une structure de table des droits (DR) ; Cette table peut être une structure à part, ou un ensemble de données attachées par exemple aux différentes caractéristiques des autres tables, comme représenté en figure 3 (structures DR_).

Lors d'une étape E251, le module acquiert les droits sur les objets constituant le groupe, l'étape étant réitérée jusqu'à ce que tous les objets du groupe concernés soient traités. Ces droits peuvent être :
- inscrits par défaut dans la structure de l'objet. Par exemple, tous les objets connectés offrent un droit d'usage sur certaines caractéristiques mises en œuvre dans l'objet groupe, ou sur toutes les caractéristiques, ou encore sur aucune caractéristique ;
- hérités ;
- définis par l'utilisateur lors de cette étape ou n'importe quelle étape précédant l'étape E25.

On peut aboutir par exemple à une affectation des droits telle que présentée dans la table 4 pour les objets O3 et O4 ;
Lors d'une étape E252, un test est effectué dans le but d'acquérir un objet suivant s'il existe.

Puis lors d'une étape E253, s'il n'y a plus d'objets connectés à traiter, le module acquiert une caractéristique Ci_OG de l'objet groupe ;
Lors d'une étape E254, il procède à une affectation d'un droit à la caractéristique de l'objet groupe ; différentes stratégies peuvent être mises en œuvre, dont quelques exemples sont donnés ci-dessous :
- l'objet groupe « hérite » des droits des objets concernés par cette caractéristique, selon de préférence une restriction : par exemple si le groupe est composé d'un objet public offrant tous les droits et d'un objet privé (détecteur privé), on peut choisir d'affecter les droits minimaux de l'objet privé dans l'objet groupe (il s'agit dans ce cas d'une intersection minimale) ; selon un autre exemple, la caractéristique C1 de l'objet groupe (détection de personne) faisant appel à la caméra, seules les fonctions partageables de la caméra sont déclarées accessibles au niveau de l'objet groupe (le zoom reste strictement réservé au propriétaire, mais le flux vidéo est rendu partageable aux habitants de la rue, etc.)
- on peut prévoir alternativement un mécanisme de requêtes au propriétaire de l'objet et acceptation de sa part pour obtenir un droit particulier sur un objet pour un utilisateur donné ou un groupe d'utilisateurs ;
- le propriétaire initial de l'objet (PR) décide, globalement ou au cas par cas (pour chaque caractéristique) des droits associés, en les rentrant par exemple via une interface homme-machine.
- l'objet groupe hérite seulement du droit sur les caractéristiques qui sont mises en œuvre par le groupe (seule la fonction capture d'image fixe de la caméra étant rendue accessible par le groupe, un utilisateur quelconque ne pourra pas accéder au flux vidéo)
- etc.

Lors d'une étape E255, un test est effectué dans le but de traiter une caractéristique suivante de l'objet groupe.

Lors d'une étape E256, lorsque toutes les caractéristiques de l'objet groupe ont été traitées, la table des droits est mise à jour. Elle pourra être utilisée lors de l'étape E27/E28 de la figure 5 pour décider si l'utilisateur qui en fait la requête a les droits sur une caractéristique de l'objet groupe et/ou des droits sur une ou plusieurs caractéristiques d'un objet connecté de l'objet groupe.

Il va de soi que le mode de réalisation qui a été décrit ci-dessus a été donné à titre purement indicatif et nullement limitatif.

## Revendications

1. Procédé de création d'un objet groupe (OG) virtuel agrégeant au moins partiellement automatiquement au moins deux objets connectés (O3, O4) d'un réseau de communications (1,3), lesdits objets connectés possédant au moins une caractéristique, dite caractéristique de base (C1_O3...CN_O3), ledit procédé étant **caractérisé en ce qu'**il comporte les étapes suivantes sur un dispositif d'agrégation (DAG), pour obtenir une structure de données, dite avatar groupe (AV_G), apte à représenter ledit objet groupe virtuel :
- obtention d'au moins un critère d'agrégation d'objets connectés;
- obtention (E20, E22) d'au moins une caractéristique de base (C1_O3... CN_O3 ; C1_O4...CN_O4) d'objets connectés à agréger selon ledit critère et d'au moins un droit d'usage et/ou de composition et/ou de transmission pour ladite caractéristique de base;
- détermination (E24) d'au moins une caractéristique dudit objet groupe (C1_OG...CN_OG) liée à au moins une caractéristique de base obtenue desdits objets connectés à agréger, via leur entrée et/ou leur sortie;
- création (E1, E21, E23, E24) de l'avatar groupe (AV_G), ledit avatar groupe comportant :
• au moins une première structure de données (SD_O3, SD_O4) comportant ladite au moins une caractéristique de base (C1_O3...CN_O3 ; C1_O4...CN_O4) desdits objets connectés à agréger;
• une seconde structure de données (SD_OG) comportant ladite au moins une caractéristique (C1_OG...CN_OG) dudit objet groupe ;
• une troisième structure de données, (SD_L) associant, via un lien entre leur entrée et/ou leur sortie, ladite caractéristique dudit objet groupe (C1_OG...CN_OG) à ladite au moins une caractéristique de base (C1_O3...CN_O3 ; C1_O4...CN_O4) obtenue desdits objets connectés à agréger;
• une quatrième structure de données (DR_O3, DR_O4, DR_OG) comportant ledit au moins un droit obtenu associé à ladite au moins une caractéristique de base obtenue desdits objets connectés à agréger;
• une cinquième structure de gestion d'adresses (PY_G) associant au moins une adresse d'accès audit objet groupe et au moins une adresse d'accès auxdits objets connectés (@O3, @O4) à agréger;
- une obtention d'un droit d'usage et/ou de composition et/ou de transmission pour une caractéristique dudit objet groupe ;
- une inscription dudit droit obtenu pour ladite caractéristique dudit objet groupe dans ledit avatar groupe.

2. Procédé de création selon la revendication 1, **caractérisé en ce que** la quatrième structure de données comporte en outre une identification d'au moins un bénéficiaire (PG, PL) du droit obtenu et **en ce que** le procédé comporte en outre :
- une étape d'obtention (E11, E25) dudit au moins un bénéficiaire (PG, PL) du droit obtenu associé à une caractéristique desdits objets connectées et/ou dudit objet groupe (Ci_OG, Ci_O3) ;
- une étape d'inscription dudit au moins un bénéficiaire dans ledit avatar groupe.

3. Procédé de création selon la revendication 1, **caractérisé en ce que** ledit droit obtenu est un droit d'usage permettant de mettre en œuvre la caractéristique associée.

4. Procédé de création selon la revendication 1, **caractérisé en ce que** ledit droit obtenu est un droit de composition permettant d'utiliser un objet du groupe ou l'objet groupe dans un nouvel objet groupe.

5. Procédé de création selon la revendication 1, **caractérisé en ce que** ledit droit obtenu est un droit de transmission permettant de transmettre un droit d'usage ou de composition dudit objet groupe.

6. Procédé de création selon la revendication 1, **caractérisé en ce que** l' obtention du droit associé à une caractéristique dudit objet groupe comporte une déduction du droit associé à une caractéristique de l'objet groupe (Ci_OG) en fonction d'au moins un droit obtenu associé à une caractéristique de base (Ci_O3).

7. Procédé de création selon la revendication 1, **caractérisé en ce qu'**il comporte en outre une déduction du droit associé à une caractéristique de base (Ci_O3) en fonction d'au moins un droit obtenu associé à une caractéristique du groupe (Ci_OG).

8. Procédé de mise en œuvre d'un objet groupe (OG) virtuel agrégeant au moins deux objets connectés (O3, O4) dans un réseau de communications (1,3), ledit objet groupe (OG) comportant une structure de données, dite avatar groupe (AV_G), le procédé étant **caractérisé en ce qu'**il comporte les étapes suivantes sur un dispositif de mise en œuvre de l'objet groupe (DMOG):
- obtention d'un message (E27) pour utiliser l'objet groupe, ledit message comportant au moins une caractéristique de l'objet groupe (C1_OG) à mettre en œuvre ;
- obtention (E28) de l'avatar groupe de l'objet groupe (AV_G), ledit avatar groupe comportant au moins :
• une première structure de données (SD_O3, SD_O4), comportant au moins une caractéristique de base (C1_O3...CN_O3 ; C1_O4...CN_O4) desdits objets connectés ;
• une seconde structure de données (SD_OG), comportant au moins une caractéristique (C1_OG...CN_OG) de l'objet groupe ;
• une troisième structure de données, associant, via un lien entre leur entrée et/ou leur sortie, ladite au moins une caractéristique (C1_OG...CN_OG) dudit objet groupe à au moins une caractéristique de base (C1_O3...CN_O3 ; C1_O4...CN_O4) desdits objets connectés;
• une quatrième structure de données (DR_O3, DR_O4, DR_OG) comportant au moins un droit d'utilisation et/ou de composition et/ou de transmission de ladite au moins une caractéristique de base desdits objets connectés et/ou de ladite au moins une caractéristique dudit objet groupe ;
• une cinquième structure de gestion d'adresses associant au moins une adresse d'accès audit objet groupe et au moins une adresse d'accès auxdits objets connectés (@O3, @O4) ;
- une comparaison (E28) de la caractéristique de groupe à mettre en œuvre (C1_OG) à ladite au moins une caractéristique de l'objet groupe de la seconde structure de données de l'avatar groupe (Ci_OG) ;
- lorsque ladite caractéristique de groupe à mettre en œuvre est une caractéristique offerte par l'objet groupe, analyse de la caractéristique de l'objet groupe à mettre en œuvre (C1_OG) comportant :
• obtention, dans la troisième structure de données, du lien entre les entrées/sorties de ladite caractéristique de groupe (C1_OG...CN_OG) et d' au moins une caractéristique de base d'un objet connecté (C1_O3...CN_O3) ;
• obtention d'un droit d'utilisation et/ou de composition et/ou de transmission pour ladite caractéristique dudit objet groupe à mettre en œuvre et/ou pour ladite au moins une caractéristique de base liée à ladite caractéristique dudit objet groupe à mettre en œuvre dans ladite troisième structure .lorsque ledit message est obtenu d'un utilisateur disposant dudit droit, mise en œuvre (E28-E31) de ladite au moins une caractéristique de base.

9. Dispositif (DAG) de création d'un objet groupe (OG) virtuel agrégant au moins partiellement automatiquement au moins deux objets connectés (O3, O4) d'un réseau de communications (1,3), lesdits objets connectés possédant au moins une caractéristique, dite caractéristique de base (C1_O3...CN_O3), ledit dispositif étant **caractérisé en ce qu'**il comporte les modules suivants, pour obtenir une structure de données , dite avatar groupe (AV_G), apte à représenter ledit objet groupe virtuel :
- un module d'obtention (E20, E22) d'au moins un critère d'agrégation d'objets connectés, d'au moins une caractéristique de base (C1_O3... CN_O3 ; C1_O4...CN_O4) d'objets connectés à agréger selon ledit critère et d'au moins un droit d'usage et/ou de composition et/ou de transmission pour ladite caractéristique de base;
- un module d'obtention (E24) d'au moins une caractéristique de l'objet groupe (C1_OG...CN_OG), liée à au moins une caractéristique de base desdits objets connectés à agréger, via leur entrée et/ou leur sortie;
- un module de création (E1, E21, E23, E24) de l'avatar groupe (AV_G), ledit avatar groupe comportant :
• au moins une première structure de données (SD_O3, SD_O4) pour lesdits objets connectés, comportant ladite au moins une caractéristique de base (C1_O3...CN_O3 ; C1_O4...CN_O4) obtenue desdits objets connectés à agréger;;
• une seconde structure de données (SD_OG), comportant ladite au moins une caractéristique (C1_OG...CN_OG) dudit objet groupe ;
• une troisième structure de données, associant, via un lien entre leur entrée et/ou leur sortie, ladite caractéristique dudit objet groupe (C1_OG...CN_OG) à ladite au moins une caractéristique de base (C1_O3...CN_O3 ; C1_O4...CN_O4) obtenue desdits objets connectés à agréger;
• une quatrième structure de données (DR_O3, DR_O4, DR_OG), comportant ledit au moins un droit obtenu associé à ladite au moins une caractéristique de base obtenue desdits objets connectés à agréger;
• une cinquième structure de gestion d'adresses (PY_G), associant au moins une adresse d'accès audit objet groupe et au moins une adresse d'accès auxdits objets connectés (@O3, @O4) à agréger;
- un module d'obtention d'un droit d'usage et/ou de composition et/ou de transmission pour une caractéristique dudit objet groupe ;
- un module d'inscription dudit droit obtenu pour ladite caractéristique dudit objet groupe dans ledit avatar groupe.

10. Dispositif de mise en œuvre (DMOG) d'un objet groupe (OG) virtuel agrégeant au moins deux objets connectés (O3, O4) dans un réseau de communications (1,3), ledit objet groupe (OG) comportant une structure de données, dite avatar groupe (AV_G), le dispositif de mise en œuvre comportant :
- un module d'obtention d'un message (E27) pour utiliser l'objet groupe, ledit message comportant au moins une caractéristique de l'objet groupe (C1_OG) à mettre en œuvre ;
- un module d'obtention (E28) de l'avatar groupe de l'objet groupe (AV_G), ledit avatar groupe comportant au moins :
• au moins une première structure de données (SD_O3, SD_O4), comportant au moins une caractéristique de base (C1_O3...CN_O3 ; C1_O4...CN_O4) desdits objets connectés;
• une seconde structure de données (SD_OG), comportant au moins une caractéristique (C1_OG...CN_OG) de l'objet groupe ;
• une troisième structure de données associant, via un lien entre leur entrée et/ou leur sortie, ladite caractéristique (C1_OG...CN_OG) dudit objet groupe à au moins une caractéristique de base (C1_O3...CN_O3 ; C1_O4...CN_O4) desdits objets connectés;
• une quatrième structure de données (DR_O3, DR_O4, DR_OG), dite structure de droits, comportant au moins un droit d'utilisation et/ou de composition et/ou de transmission de ladite au moins une caractéristique de base desdits objets connectés et/ou de ladite au moins une caractéristique dudit objet groupe ;
• une cinquième structure de gestion d'adresses associant au moins une adresse d'accès audit objet groupe et au moins une adresse d'accès auxdits objets connectés agrégés (@O3, @O4) ;
- un module de comparaison (E28) de la caractéristique de groupe à mettre en œuvre (C1_OG) à ladite au moins une caractéristique de l'objet groupe de la seconde structure de données de l'avatar groupe (Ci_OG) ;
- un module d'analyse de la caractéristique de l'objet groupe à mettre en œuvre (C1_OG), lorsque ladite caractéristique de groupe à mettre en œuvre est une caractéristique offerte par l'objet groupe, ladite analyse comportant:
• une obtention, dans la dans la troisième structure de données, du lien entre les entrées/sorties de ladite caractéristique de groupe (C1_OG...CN_OG) et d'au moins une caractéristique de base (C1_O3...CN_O3) ; d'un objet connecté ;
• une obtention d'un droit d'utilisation et/ou de composition et/ou de transmission pour ladite caractéristique dudit objet groupe à mettre en œuvre et/ou pour ladite au moins une caractéristique de base liée à ladite caractéristique dudit objet groupe à mettre en œuvre dans ladite troisième structure,
- un module de mise en œuvre (E28-E31) de ladite au moins une caractéristique de base lorsque ledit message est obtenu d'un utilisateur disposant dudit droit, mise en œuvre (E28-E31) de ladite au moins une caractéristique de base.

11. Passerelle domestique (2) comprenant un dispositif de création selon la revendication 9 et/ou un dispositif de mise en œuvre selon la revendication 10.

12. Programme d'ordinateur apte à être mis en œuvre sur un dispositif de création selon la revendication 9, le programme comprenant des instructions de code qui, lorsque le programme est exécuté par un processeur, réalise les étapes du procédé de création défini selon l'une des revendications 1 à 7.

13. Programme d'ordinateur apte à être mis en œuvre sur un dispositif de mise en œuvre selon la revendication 10, le programme comprenant des instructions de code qui, lorsque le programme est exécuté par un processeur, réalise les étapes du procédé de mise en œuvre d'un objet groupe défini selon la revendication 8.

## Patentansprüche

1. Verfahren zum Erstellen eines virtuellen Gruppenobjekts (OG), das mindestens zwei verbundene Objekte (O3, O4) eines Kommunikationsnetzwerks (1, 3) zumindest teilweise automatisch aggregiert, wobei die verbundenen Objekte mindestens ein Merkmal, das sogenannte Basismerkmal (C1_O3... CN_O3) aufweisen, wobei das Verfahren **dadurch gekennzeichnet ist, dass** es die folgenden Schritte auf einer Aggregationsvorrichtung (DAG) aufweist, um eine Datenstruktur zu erhalten, die als Gruppenavatar (AV_G) bezeichnet wird und geeignet ist, das virtuelle Gruppenobjekt darzustellen:
- Erhalten mindestens eines Kriteriums für das Aggregieren verbundener Objekte;
- Erhalten (E20, E22) mindestens eines Basismerkmals (C1_O3... CN_O3; C1_O4... CN_O4) von verbundenen Objekten, die gemäß dem Kriterium aggregiert werden sollen, und mindestens eines Nutzungs- und/oder Zusammensetzungs- und/oder Übertragungsrechts für das Basismerkmal;
- Bestimmen (E24) mindestens eines Merkmals des Gruppenobjekts (C1_OG... CN_OG), das mit mindestens einem Basismerkmal verknüpft ist, das von den zu aggregierenden verbundenen Objekten über deren Eingang und/oder Ausgang erhalten wurde;
- Erstellen (E1, E21, E23, E24) des Gruppenavatars (AV_G), wobei der Gruppenavatar Folgendes aufweist:
• mindestens eine erste Datenstruktur (SD_O3, SD_O4) mit mindestens einem Basismerkmal (C1_O3... CN_O3; C1_O4... CN_O4) der zu aggregierenden verbundenen Objekte;
• eine zweite Datenstruktur (SD_OG) mit dem mindestens einen Merkmal (C1_OG... CN_OG) des Gruppenobjekts;
• eine dritte Datenstruktur (SD_L), die über eine Verknüpfung zwischen ihrem Eingang und/oder ihrem Ausgang das Merkmal des Gruppenobjekts (C1_OG... CN_OG) dem mindestens einen Basismerkmal (C1_O3... CN_O3; C1_O4... CN_O4) zuordnet, das von den zu aggregierenden verbundenen Objekten erhalten wurde;
• eine vierte Datenstruktur (DR_O3, DR_O4, DR_OG) mit dem mindestens einen erworbenen Recht, das dem mindestens einen erworbenen Basismerkmal der zu aggregierenden verbundenen Objekte zugeordnet ist;
• eine fünfte Adressverwaltungsstruktur (PY_G), die mindestens eine Zugangsadresse zu dem Gruppenobjekt und mindestens eine Zugangsadresse zu den zu aggregierenden verbundenen Objekten (@O3, @O4) zuordnet;
- Erhalten eines Nutzungs- und/oder Zusammensetzungs- und/oder Übertragungsrechts für ein Merkmal des Gruppenobjekts;
- Eintragen des Rechts, das für das Merkmal des Gruppenobjekts erhalten wurde, im Gruppenavatar.

2. Verfahren zum Erstellen nach Anspruch 1, **dadurch gekennzeichnet, dass** die vierte Datenstruktur außerdem ein Identifizieren mindestens eines Begünstigten (PG, PL) des erhaltenen Rechts aufweist und dass das Verfahren darüber hinaus Folgendes aufweist:
- einen Schritt zum Erhalten (E11, E25) des mindestens einen Begünstigten (PG, PL) des erhaltenen Rechts, das einem Merkmal der verbundenen Objekte und/oder des Gruppenobjekts (Ci_OG, Ci_O3) zugeordnet ist;
- einen Schritt zum Eintragen des mindestens einen Begünstigten im Gruppenavatar.

3. Verfahren zum Erstellen nach Anspruch 1, **dadurch gekennzeichnet, dass** das erhaltene Recht ein Nutzungsrecht ist, das die Implementierung des zugeordneten Merkmals ermöglicht.

4. Verfahren zum Erstellen nach Anspruch 1, **dadurch gekennzeichnet, dass** das erhaltene Recht ein Zusammensetzungsrecht ist, das es ermöglicht, ein Objekt der Gruppe oder das Gruppenobjekt in einem neuen Gruppenobjekt zu verwenden.

5. Verfahren zum Erstellen nach Anspruch 1, **dadurch gekennzeichnet, dass** das erhaltene Recht ein Übertragungsrecht ist, das es ermöglicht, ein Nutzungs- oder Zusammensetzungsrecht des Gruppenobjekts zu übertragen.

6. Verfahren zum Erstellen nach Anspruch 1, **dadurch gekennzeichnet, dass** das Erhalten des Rechts, das einem Merkmal des Gruppenobjekts zugeordnet ist, ein Herabsetzen des Rechts aufweist, das einem Merkmal des Gruppenobjekts (CI_OG)zugeordnet ist, als eine Funktion von mindestens einem erhaltenen Recht, das einem Basismerkmal (CI_O3) zugeordnet ist.

7. Verfahren zum Erstellen nach Anspruch 1, **dadurch gekennzeichnet, dass** es darüber hinaus ein Herabsetzen des Rechts aufweist, das einem Basismerkmal (CI_O3) zugeordnet ist, als eine Funktion von mindestens einem erhaltenen Recht, das einem Gruppenmerkmal (Ci_OG) zugeordnet ist.

8. Verfahren zum Implementieren eines virtuellen Gruppenobjekts (OG), das mindestens zwei verbundene Objekte (O3, O4) in einem Kommunikationsnetzwerk (1, 3) aggregiert, wobei das Gruppenobjekt (OG) eine Datenstruktur aufweist, die als Gruppenavatar (AV_G) bezeichnet wird, wobei das Verfahren **dadurch gekennzeichnet ist, dass** es die folgenden Schritte auf einer Vorrichtung zum Implementieren des Gruppenobjekts (DMOG) aufweist:
- Erhalten einer Nachricht (E27) zum Verwenden des Gruppenobjekts, wobei die Nachricht mindestens ein Merkmal des Gruppenobjekts (C1_OG) enthält, das implementiert werden soll;
- Erhalten (E28) des Gruppenavatars des Gruppenobjekts (AV_G), wobei der Gruppenavatar mindestens Folgendes aufweist:
• eine erste Datenstruktur (SD_O3, SD_O4) mit mindestens einem Basismerkmal (C1_O3... CN_O3; C1_O4... CN_O4) der verbundenen Objekte;
• eine zweite Datenstruktur (SD_OG) mit mindestens einem Merkmal (C1_OG... CN_OG) des Gruppenobjekts;
• eine dritte Datenstruktur, die über eine Verknüpfung zwischen ihrem Eingang und/oder ihrem Ausgang das mindestens eine Merkmal (C1_OG... CN_OG) des Gruppenobjekts dem mindestens einen Basismerkmal (C1_O3... CN_O3; C1_O4... CN_O4) der verbundenen Objekte zuordnet;
• eine vierte Datenstruktur (DR_O3, DR_O4, DR_OG) mit mindestens einem Nutzungs- und/oder Zusammensetzungs- und/oder Übertragungsrecht des mindestens einen Basismerkmals der verbundenen Objekte und/oder des mindestens einen Merkmals des Gruppenobjekts;
• eine fünfte Adressverwaltungsstruktur, die mindestens eine Zugangsadresse zu dem Gruppenobjekt und mindestens eine Zugangsadresse zu den verbundenen Objekten (@O3, @O4) zuordnet;
- Vergleichen (E28) des zu implementierenden Gruppenmerkmals (C1_OG) mit dem mindestens einen Merkmal des Gruppenobjekts der zweiten Datenstruktur des Gruppenavatars (Ci_OG);
- wenn das zu implementierende Gruppenmerkmal ein vom Gruppenobjekt angebotenes Merkmal ist, Analysieren des zu implementierenden Merkmals des Gruppenobjekts (C1_OG), bestehend aus:
• Erhalten, in der dritten Datenstruktur, der Verknüpfung zwischen den Eingängen/Ausgängen des Gruppenmerkmals (C1_OG... CN_OG) und von mindestens einem Basismerkmal eines verbundenen Objekts (C1_O3... CN_O3);
• Erhalten eines Nutzungs- und/oder Zusammensetzungs- und/oder Übertragungsrechts für das Merkmal des Gruppenobjekts, das implementiert werden soll, und/oder für das mindestens eine Basismerkmal, das mit dem Merkmal des Gruppenobjekts verknüpft ist, das in der dritten Struktur implementiert werden soll; wenn die Nachricht von einem Benutzer erhalten wird, der über das Recht verfügt, Implementieren (E28-E31) des mindestens einen Basismerkmals.

9. Vorrichtung zum Erstellen eines virtuellen Gruppenobjekts (OG), das mindestens zwei verbundene Objekte (O3, O4) eines Kommunikationsnetzwerks (1, 3) zumindest teilweise automatisch aggregiert, wobei die verbundenen Objekte mindestens ein Merkmal, das sogenannte Basismerkmal (C1_O3... CN_O3) aufweisen, wobei die Vorrichtung **dadurch gekennzeichnet ist, dass** sie die folgenden Module aufweist, um eine Datenstruktur zu erhalten, die als Gruppenavatar (AV_G) bezeichnet wird und geeignet ist, das virtuelle Gruppenobjekt darzustellen:
- ein Modul zum Erhalten (E20, E22) mindestens eines Aggregationskriteriums für verbundene Objekte, mindestens eines Basismerkmals (C1_O3... CN_O3; C1_O4... CN_O4) von verbundenen Objekten, die gemäß dem Kriterium aggregiert werden sollen, und mindestens eines Nutzungs- und/oder Zusammensetzungs- und/oder Übertragungsrechts für das Basismerkmal;
- ein Modul zum Erhalten (E24) mindestens eines Merkmals des Gruppenobjekts (C1_OG... CN_OG), das mit mindestens einem Basismerkmal der zu aggregierenden verbundenen Objekten verknüpft ist, über deren Eingang und/oder Ausgang;
- ein Modul zum Erstellen (E1, E21, E23, E24) des Gruppenavatars (AV_G), wobei der Gruppenavatar Folgendes aufweist:
• mindestens eine erste Datenstruktur (SD_O3, SD_O4) für die verbundenen Objekte mit mindestens einem Basismerkmal (C1_O3... CN_O3; C1_O4... CN_O4), das von den zu aggregierenden verbundenen Objekten erhalten wurde;
• eine zweite Datenstruktur (SD_OG) mit dem mindestens einen Merkmal (C1_OG... CN_OG) des Gruppenobjekts;
• eine dritte Datenstruktur, die über eine Verknüpfung zwischen ihrem Eingang und/oder ihrem Ausgang das Merkmal des Gruppenobjekts (C1_OG... CN_OG) dem mindestens einen Basismerkmal (C1_O3... CN_O3; C1_O4... CN_O4) zuordnet, das von den zu aggregierenden verbundenen Objekten erhalten wurde;
• eine vierte Datenstruktur (DR_O3, DR_O4, DR_OG) mit dem mindestens einen erworbenen Recht, das dem mindestens einen erworbenen Basismerkmal der zu aggregierenden verbundenen Objekte zugeordnet ist;
• eine fünfte Adressverwaltungsstruktur (PY_G), die mindestens eine Zugangsadresse zu dem Gruppenobjekt und mindestens eine Zugangsadresse zu den zu aggregierenden verbundenen Objekten (@O3, @O4) zuordnet;
- ein Modul zum Erhalten eines Nutzungs- und/oder Zusammensetzungs- und/oder Übertragungsrechts für ein Merkmal des Gruppenobjekts;
- ein Modul zum Eintragen des Rechts, das für das Merkmal des Gruppenobjekts erhalten wurde, im Gruppenavatar.

10. Vorrichtung zum Implementieren (DMOG) eines virtuellen Gruppenobjekts (OG), das mindestens zwei verbundene Objekte (O3, O4) in einem Kommunikationsnetzwerk (1, 3) aggregiert, wobei das Gruppenobjekt (OG) eine Datenstruktur aufweist, die als Gruppenavatar (AV_G) bezeichnet wird, wobei die Vorrichtung zum Implementieren Folgendes aufweist:
- Modul zum Erhalten einer Nachricht (E27) zum Verwenden des Gruppenobjekts, wobei die Nachricht mindestens ein Merkmal des Gruppenobjekts (C1_OG) enthält, das implementiert werden soll;
- Modul zum Erhalten (E28) des Gruppenavatars des Gruppenobjekts (AV_G), wobei der Gruppenavatar mindestens Folgendes aufweist:
• mindestens eine erste Datenstruktur (SD_O3, SD_O4) mit mindestens einem Basismerkmal (C1_O3... CN_O3; C1_O4... CN_O4) der verbundenen Objekte;
• eine zweite Datenstruktur (SD_OG) mit mindestens einem Merkmal (C1_OG... CN_OG) des Gruppenobjekts;
• eine dritte Datenstruktur, die über eine Verknüpfung zwischen ihrem Eingang und/oder ihrem Ausgang das Merkmal (C1_OG... CN_OG) des Gruppenobjekts dem mindestens einen Basismerkmal (C1_O3... CN_O3; C1_O4... CN_O4) der verbundenen Objekte zuordnet;
• eine vierte Datenstruktur (DR_O3, DR_O4, DR_OG), die sogenannte Rechte-Struktur, mit mindestens einem Nutzungs- und/oder Zusammensetzungs- und/oder Übertragungsrecht des mindestens einen Basismerkmals der verbundenen Objekte und/oder des mindestens einen Merkmals des Gruppenobjekts;
• eine fünfte Adressverwaltungsstruktur, die mindestens eine Zugangsadresse zu dem Gruppenobjekt und mindestens eine Zugangsadresse zu den aggregierten verbundenen Objekten (@O3, @O4) zuordnet;
- ein Modul zum Vergleichen (E28) des zu implementierenden Gruppenmerkmals (C1_OG) mit dem mindestens einen Merkmal des Gruppenobjekts der zweiten Datenstruktur des Gruppenavatars (Ci_OG);
- ein Modul zum Analysieren des zu implementierenden Merkmals des Gruppenobjekts (C1_OG), wenn das zu implementierende Gruppenmerkmal ein vom Gruppenobjekt angebotenes Merkmal ist, bestehend aus:
• Erhalten, in der dritten Datenstruktur, der Verknüpfung zwischen den Eingängen/Ausgängen des Gruppenmerkmals (C1_OG... CN_OG) und von mindestens einem Basismerkmal (C1_O3... CN_O3) eines verbundenen Objekts;
• Erhalten eines Nutzungs- und/oder Zusammensetzungs- und/oder Übertragungsrechts für das Merkmal des Gruppenobjekts, das implementiert werden soll, und/oder für das mindestens eine Basismerkmal, das mit dem Merkmal des Gruppenobjekts verknüpft ist, das in der dritten Struktur implementiert werden soll;
- Ein Modul zum Implementieren (E28-E31) des mindestens einen Basismerkmals, wenn die Nachricht von einem Benutzer erhalten wird, der über das Recht verfügt, Implementieren (E28-E31) des mindestens einen Basismerkmals.

11. Heim-Gateway (2) mit einer Vorrichtung zum Erstellen nach Anspruch 9 und/oder einer Vorrichtung zum Implementieren nach Anspruch 10.

12. Computerprogramm, das auf einer Vorrichtung zum Erstellen nach Anspruch 9 implementiert werden kann, wobei das Programm Codebefehle aufweist, die, wenn das Programm von einem Prozessor ausgeführt wird, die Schritte des Verfahrens zum Erstellen nach einem der Ansprüche 1 bis 7 ausführen.

13. Computerprogramm, das auf einer Vorrichtung zum Implementieren nach Anspruch 10 implementiert werden kann, wobei das Programm Codebefehle aufweist, die, wenn das Programm von einem Prozessor ausgeführt wird, die Schritte des Verfahrens zum Implementieren eines definierten Gruppenobjekts nach Anspruch 8 ausführen.

## Claims

1. Method for creating a virtual group object (OG) aggregating at least partially automatically at least two connected objects (O3, O4) of a communications network (1,3), said connected objects having at least one feature, called a basic feature (C1_O3... CN_O3), said method being **characterized in that** it comprises the following steps on an aggregation device (DAG), in order to obtain a data structure, called a group avatar (AV_G), suitable for representing said virtual group object:
- obtaining at least one connected objects aggregation criterion;
- obtaining (E20, E22) at least one basic feature (C1_O3... CN_O3; C1_O4... CN_O4) of connected objects to be aggregated according to said criterion, and at least one right of use and/or of composition and/or of transmission for said basic feature;
- determining (E24) at least one feature of said group object (C1_OG... CN_OG) linked to at least one obtained basic feature of said connected objects to be aggregated, via their input and/or their output;
- creating (E1, E21, E23, E24) the group avatar (AV_G), said group avatar comprising:
• at least one first data structure (SD_O3, SD_O4) comprising said at least one basic feature (C1_O3... CN_O3; C1_O4... CN_O4) of said connected objects to be aggregated;
• a second data structure (SD_OG) comprising said at least one feature (C1_OG... CN_OG) of said group object;
• a third data structure (SD_L) associating, via a link between their input and/or their output, said feature of said group object (C1_OG... CN_OG) with said at least one obtained basic feature (C1_O3... CN_O3; C1_O4... CN_O4) of said connected objects to be aggregated;
• a fourth data structure (DR_O3, DR_O4, DR_OG) comprising said at least one obtained right associated with said at least one obtained basic feature of said connected objects to be aggregated;
• an address management fifth structure (PY_G) associating at least one access address of said group object and at least one access address of said connected objects (@O3, @O4) to be aggregated;
- obtaining a right of use and/or of composition and/or of transmission for a feature of said group object;
- registering said right obtained for said feature of said group object in said group avatar.

2. Creation method according to Claim 1, **characterized in that** the fourth data structure further comprises an identification of at least one beneficiary (PG, PL) of the obtained right and **in that** the method further comprises:
- a step of obtaining (E11, E25) said at least one beneficiary (PG, PL) of the obtained right associated with a feature of said connected objects and/or said group object (Ci_OG, Ci_O3);
- a step of registering said at least one beneficiary in said group avatar.

3. Creation method according to Claim 1, **characterized in that** said obtained right is a right of use allowing the associated feature to be implemented.

4. Creation method according to Claim 1, **characterized in that** said obtained right is a composition right allowing the use of an object of the group or the group object in a new group object.

5. Creation method according to Claim 1, **characterized in that** said obtained right is a transmission right allowing the transmission of a right of use or composition right of said group object.

6. Creation method according to Claim 1, **characterized in that** obtaining the right associated with a feature of said group object comprises deducing the right associated with a feature of the group object (Ci_OG) according to at least one obtained right associated with a basic feature (Ci_O3).

7. Creation method according to Claim 1, **characterized in that** it further comprises deducing the right associated with a basic feature (Ci_O3) according to at least one obtained right associated with a feature of the group (Ci_OG).

8. Method for the implementation of a virtual group object (OG) aggregating at least two connected objects (O3, O4) in a communications network (1,3), said group object (OG) comprising a data structure, called a group avatar (AV_G), the method being **characterized in that** it comprises the following steps on a device for the implementation of the group object (DMOG):
- obtaining a message (E27) to use the group object, said message comprising at least one feature of the group object (C1_OG) to be implemented;
- obtaining (E28) the group avatar of the group object (AV_G), said group avatar comprising at least:
• a first data structure (SD_O3, SD_O4), comprising at least one basic feature (C1_O3... CN_O3; C1_O4... CN_O4) of said connected objects;
• a second data structure (SD_OG), comprising at least one feature (C1_OG... CN_OG) of the group object;
• a third data structure associating, via a link between their input and/or their output, said at least one feature (C1_OG... CN_OG) of said group object with at least one basic feature (C1_O3... CN_O3; C1_O4... CN_O4) of said connected objects;
• a fourth data structure (DR_O3, DR_O4, DR_OG) comprising at least one right of use and/or of composition and/or of transmission of said at least one basic feature of said connected objects and/or said at least one feature of said group object;
• an address management fifth structure associating at least one access address of said group object and at least one access address of said connected objects (@O3, @O4);
- comparing (E28) the group feature to be implemented (C1_OG) with said at least one feature of the group object of the second data structure of the group avatar (Ci_OG);
- when said group feature to be implemented is a feature offered by the group object, analysing the feature of the group object to be implemented (C1_OG), this comprising:
• obtaining, in the third data structure, the link between the inputs/outputs of said group feature (C1_OG... CN_OG) and at least one basic feature of a connected object (C1_O3... CN_O3);
• obtaining a right of use and/or of composition and/or of transmission for said feature of said group object to be implemented and/or for said at least one basic feature linked to said feature of said group object to be implemented in said third structure .when said message is obtained from a user having said right, implementing (E28-E31) said at least one basic feature.

9. Device (DAG) for creating a virtual group object (OG) aggregating at least partially automatically at least two connected objects (O3, O4) of a communications network (1,3), said connected objects having at least one feature, called a basic feature (C1_O3... CN_O3), said device being **characterized in that** it comprises the following modules, in order to obtain a data structure, called a group avatar (AV_G), suitable for representing said virtual group object:
- a module for obtaining (E20, E22) at least one connected objects aggregation criterion, at least one basic feature (C1_O3... CN_O3; C1_O4... CN_O4) of connected objects to be aggregated according to said criterion, and at least one right of use and/or of composition and/or of transmission for said basic feature;
- a module for obtaining (E24) at least one feature of the group object (C1_OG... CN_OG) linked to at least one basic feature of said connected objects to be aggregated, via their input and/or output;
- a module for creating (E1, E21, E23, E24) the group avatar (AV_G), said group avatar comprising:
• at least one first data structure (SD_O3, SD_O4) for said connected objects, comprising said at least one obtained basic feature (C1_O3... CN_O3; C1_O4... CN_O4) of said connected objects to be aggregated;
• a second data structure (SD_OG), comprising said at least one feature (C1_OG... CN_OG) of said group object;
• a third data structure associating, via a link between their input and/or their output, said feature of said group object (C1_OG... CN_OG) with said at least one obtained basic feature (C1_O3... CN_O3; C1_O4... CN_O4) of said connected objects to be aggregated;
• a fourth data structure (DR_O3, DR_O4, DR_OG), comprising said at least one obtained right associated with said at least one obtained basic feature of said connected objects to be aggregated;
• an address management fifth structure (PY_G), associating at least one access address of said group object and at least one access address of said connected objects (@O3, @O4) to be aggregated;
- a module for obtaining a right of use and/or of composition and/or of transmission for a feature of said group object;
- a module for registering said right obtained for said feature of said group object in said group avatar.

10. Device (DMOG) for the implementation of a virtual group object (OG) aggregating at least two connected objects (O3, O4) in a communications network (1,3), said group object (OG) comprising a data structure, called a group avatar (AV_G), the implementation device comprising:
- a module for obtaining a message (E27) to use the group object, said message comprising at least one feature of the group object (C1_OG) to be implemented;
- a module for obtaining (E28) the group avatar of the group object (AV_G), said group avatar comprising at least:
• at least one first data structure (SD_O3, SD_O4), comprising at least one basic feature (C1_O3... CN_O3; C1_O4... CN_O4) of said connected objects;
• a second data structure (SD_OG), comprising at least one feature (C1_OG... CN_OG) of the group object;
• a third data structure associating, via a link between their input and/or their output, said feature (C1_OG... CN_OG) of said group object with at least one basic feature (C1_O3... CN_O3; C1_O4... CN_O4) of said connected objects;
• a fourth data structure (DR_O3, DR_O4, DR_OG), called a rights structure, comprising at least one right of use and/or of composition and/or of transmission of said at least one basic feature of said connected objects and/or said at least one feature of said group object;
• an address management fifth structure associating at least one access address of said group object and at least one access address of said aggregated connected objects (@O3, @O4);
- a module for comparing (E28) the group feature to be implemented (C1_OG) with said at least one feature of the group object of the second data structure of the group avatar (Ci_OG);
- a module for analysing the feature of the group object to be implemented (C1_OG), when said group feature to be implemented is a feature offered by the group object, said analysis comprising:
• obtaining, in the third data structure, the link between the inputs/outputs of said group feature (C1_OG... CN_OG) and at least one basic feature (C1_O3... CN_O3); of a connected object;
• obtaining a right of use and/or of composition and/or of transmission for said feature of said group object to be implemented and/or for said at least one basic feature linked to said feature of said group object to be implemented in said third structure,
- a module for implementing (E28-E31) said at least one basic feature when said message is obtained from a user having said right, implementing (E28-E31) said at least one basic feature.

11. Home gateway (2) comprising a creation device according to Claim 9 and/or an implementation device according to Claim 10.

12. Computer program suitable for being implemented on a creation device according to Claim 9, the program comprising code instructions which, when the program is executed by a processor, carries out the steps of the creation method defined in any of Claims 1 to 7.

13. Computer program suitable for being implemented on an implementation device according to Claim 10, the program comprising code instructions which, when the program is executed by a processor, carries out the steps of the method for the implementation of a group object defined in Claim 8.
